# EUROPÄISCHE PATENTANMELDUNG

(11) **EP 3 660 993 A1**
(43) Veröffentlichungstag der Anmeldung: **03.06.2020**
(21) Anmeldenummer: 19205668.7
(22) Anmeldetag: 28.10.2019
(51) Int. Cl.: H02G 1/08, G02B 6/44, H02G 9/10

(54) **ANSCHLUSSGEHÄUSEVORRICHTUNG**

(30) Priorität: 29.11.2018 EP 18209245; 19.03.2019 DE 202019001267 U; 06.06.2019 DE 202019002446 U
(71) Anmelder: Hauff-Technik GmbH & Co. KG, 89568 Hermaringen (DE)
(72) Erfinder: SCHMID, Jörg, 89129 Langenau (DE); PHAM. Ngoc Hoang Anh, 89520 Heidenheim (DE)
(74) Vertreter: König Szynka Tilmann von Renesse Patentanwälte Partnerschaft mbB

(57) **Zusammenfassung**

Verwendung einer Anschlussgehäusevorrichtung (1) zum Bereitstellen einer Datenkabelanbindung für eine Datennutzer- oder Datenverteilerstelle (16), und zwar einer Anbindung an eine Datenkabel-Verzweigungsstelle (24), welche Anschlussgehäusevorrichtung (1) ein Anschlussgehäuse (2) und ein Fitting (100) aufweist, wobei das Anschlussgehäuse (2) einen Gehäuseinnenraum (4) begrenzt, der über eine Öffnung (5) in dem Anschlussgehäuse (2) zugänglich ist, und wobei das Fitting (100) an dem Anschlussgehäuse (2) festgelegt ist, bei welcher Verwendung das Anschlussgehäuse (2) zwischen der Datenkabel-Verzweigungsstelle (24) und der Datennutzer- oder Datenverteilerstelle (16) solchermaßen in einen Boden eingebaut wird, dass der Gehäuseinnenraum (4) von oben über die Öffnung (5) in dem Anschlussgehäuse (2) zugänglich bleibt, und bei welcher Verwendung ferner ein Leerrohr (8.1) zwischen der Datenkabel-Verzweigungsstelle (24) und dem Anschlussgehäuse (2) in dem Boden verlegt wird, wobei das Leerrohr (8.1) über das Fitting (100) an das Anschlussgehäuse (2) und damit an den Gehäuseinnenraum (4) angeschlossen wird.

## Beschreibung

Die vorliegende Erfindung betrifft eine Anschlussgehäusevorrichtung bzw. deren Verwendung zum Einbauen in den Boden.

Wie nachstehend im Einzelnen deutlich wird, richtet sich der vorliegende Gegenstand speziell auf das letzte Teilstück eines Datenkabelnetzes, nämlich die Anbindung des Nutzers bzw. Verteilers an eine Datenkabel-Verzweigungsstelle. Bei letzterer kann es sich z. B. um einen Abzweig aus einem Strang handeln, der entlang einer Straße im Boden verläuft. An diesen kann dann z. B. als Datennutzer ein Gebäude angebunden werden, insbesondere ein Wohngebäude.

Der vorliegenden Erfindung liegt das technische Problem zugrunde, eine vorteilhafte Verwendung zur Anbindung eines Nutzers/Verteilers an eine Datenkabel-Verzweigungsstelle anzugeben.

Dies wird erfindungsgemäß mit der Verwendung gemäß Anspruch 1 gelöst. Dabei wird das Datenkabel nicht direkt von der Datenkabel-Verzweigungsstelle zu dem Nutzer/Verteiler verlegt, sondern wird dazwischen eine Datenkabel-Verzweigungsstelle im Boden platziert. Diese weist ein Anschlussgehäuse auf, dessen Gehäuseinnenraum über eine Öffnung zugänglich ist. Das Anschlussgehäuse wird so in den Boden eingebaut, dass die Öffnung oben liegt, also der Gehäuseinnenraum von oben durch die Öffnung zugänglich bleibt. Das Anschlussgehäuse wird über ein Leerrohr an die Datenkabel-Verzweigungsstelle angebunden, das im Boden verlegt wird bzw. ist. Die Verbindung des Leerrohres mit dem Anschlussgehäuse erfolgt über ein Fitting, das an das Fitting gesetzte Leerrohr mündet dann in den Gehäuseinnenraum.

Mit diesem Aufbau wird ein Zugangspunkt geschaffen, was die nachfolgenden Installationsarbeiten vereinfachen kann, auch wenn die Boden- bzw. Straßenbauarbeiten dann bereits abgeschlossen sind. Das Anschlussgehäuse kann bspw. in den Schichtaufbau der Straße integriert sein, und um das Anschlussgehäuse herum kann bereits der Straßenbelag aufgebracht bzw. wiederhergestellt werden. Der Gehäuseinnenraum ist dann gleichwohl noch von oben über die Öffnung zugänglich. Dabei verbindet das im Boden verlegte Leerrohr diesen Zugangspunkt mit der Datenkabel-Verzweigungsstelle, weswegen der Schnittstelle des Leerrohrs zum Anschlussgehäuse eine besondere Bedeutung zukommen kann.

Das erfindungsgemäß vorgesehene Fitting kann einerseits eine vergleichsweise einfache und schnelle Montage des Leerrohres am Anschlussgehäuse ermöglichen, was in Anbetracht des Zeitdrucks der Erdarbeiten von Vorteil sein und z. B. Montagefehlern vorbeugen kann. Andererseits ist die Schnittstelle nach der Herstellung des Bodenaufbaus nicht mehr bzw. nur noch unter erheblichem Aufwand (z. B. Aufbrechen des Straßenbelags) zugänglich, muss das Leerrohr also beim Zuschütten etc. zuverlässig gehalten sein, was mit dem Fitting erreicht wird. Das Fitting ist an dem Anschlussgehäuse festgelegt, also in einer definierten Relativposition daran angeordnet. Es kann im Allgemeinen bspw. auch eingeformt sein, also als Einlegeteil umspritzt; bevorzugt ist es mit dem Anschlussgehäuse zusammengesetzt, also daran montiert, siehe unten im Detail. Unabhängig davon im Einzelnen kann das Fitting einen Übergang markieren zwischen dem Gehäuseinnenraum und dem gehäuseaußenseitigen Boden bzw. Erdreich.

Das Vorsehen eines Zugangspunkts zwischen Datenkabel-Verzweigungsstelle und Nutzer/Verteiler kann je nach Anwendung unterschiedliche Vorteile haben, im Folgenden wird zunächst exemplarisch die Erschließung eines Wohngebäudes im Bestand diskutiert. Hierbei kann die Netzverlegung typischerweise für ganze Stra-ßenzüge bzw. Orts- oder Stadtteile erfolgen. Es wird dann die Straße, bspw. der Gehweg, aufgegraben und z. B. ein Kabelstrang verlegt, von dem bei jedem anzuschließenden Haushalt ein Kabel abgezweigt wird (an einer jeweiligen Datenkabel-Verzweigungsstelle). Der straßenseitige Graben wird dann wieder verfüllt und die zuvor aufgebrochene Deckschicht wird wiederhergestellt.

Die Erfinder haben festgestellt, dass sich hierbei jedoch meist nur der kleinere Teil der Anwohner bzw. Eigentümer für eine Nachrüstung sofort entscheidet (typischerweise 1/3). Weitere Anschlüsse werden dann erst später, nach und nach angefragt. Hierfür muss dann jeweils erneut aufgegraben, also insbesondere die Deckschicht aufgebrochen und ein Abzweig zu dem jeweiligen Gebäude verlegt werden, was erheblichen Aufwand bedeutet. Es muss ferner bei jeder Nachbelegung der Bodenaufbau dann auch wiederhergestellt werden (insbesondere die Deckschicht/der Belag).

Demgegenüber bietet das erfindungsgemäße Vorgehen die Möglichkeit, bei den vorerst noch nicht angeschlossenen Gebäuden jeweils ein Anschlussgehäuse zu setzen. Es kann dann entweder sogar bereits das Datenkabel bis in das Anschlussgehäuse verlegt und dort (vorerst) verwahrt werden, oder es kann das Anschlussgehäuse zumindest über das Leerrohr angebunden sein. Soll das Gebäude dann später (nach der eigentlichen Erschließung des Straßenzugs) doch noch angeschlossen werden, muss je nach Position des Anschlussgehäuses zumindest nicht der Gehweg/die Straße aufgegraben werden, mitunter ist auch gar kein Aufgraben notwendig (z. B. wenn das Anschlussgehäuse direkt am Gebäude sitzt, siehe unten im Detail).

Auch wenn das Datenkabel nicht gleich bis in das Anschlussgehäuse vorverlegt wird, sondern dieses zunächst nur über das Leerrohr an die Datenkabel-Verzweigungsstelle angebunden ist, kann ein nachträgliches Anschließen des Gebäudes deutlich vereinfacht sein. Durch das Leerrohr kann dann nämlich das Datenkabel nachträglich eingeschoben bzw. -blasen werden, was bevorzugt von der Datenkabel-Verzweigungsstelle bzw. über diese erfolgt.

Bevorzugte Ausführungsformen sind Gegenstand der abhängigen Ansprüche sowie der gesamten Offenbarung, wobei bei der Darstellung der Merkmale nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen. Werden also bspw. die Vorteile der Anschlussgehäusevorrichtung in einer bestimmten Anwendung geschildert, ist dies auch als Offenbarung eines solchen Montageverfahrens bzw. einer entsprechenden Verwendung zu verstehen.

Das Leerrohr wird bevorzugt in das Fitting eingeschoben, was z. B. wegen des glatten Übergangs der Innenwandflächen das Hindurchführen des Datenkabels vereinfachen kann. Nach dem Ansetzen bzw. Einschieben kann das Leerrohr bspw. mit einer Überwurfmutter, die auf- bzw. festgeschraubt wird, arretiert und kann eine Auszugssicherung geschaffen werden (Schraubfitting). Bevorzugt weist das Fitting einen Arretierungsring mit Sperrzähnen auf, die sich an dem Hohlrohr verkrallen und eine Auszugssicherung schaffen, vorzugsweise an dessen Außenwandfläche. Besonders bevorzugt ist dann gar kein zusätzliches Verschrauben mehr notwendig, hält also allein der Arretierungsring das Leerrohr (Steckfitting mit Arretierung). Im Falle eines Fittings mit Arretierung kann die zum Ausziehen des Leerohres notwendige Kraft bspw. mindestens das 2- oder 4-Fache der zum Ansetzen (insbesondere Einschieben) notwendigen Kraft ausmachen, mit möglichen Obergrenzen bei z. B. höchstens dem 1000-, 500-, 100- bzw. 50-Fachen.

Das an dem Anschlussgehäuse festgelegte Fitting ist bevorzugt an oder in einer Gehäusewand des Anschlussgehäuses angeordnet, welche den Gehäuseinnenraum vertikal (Bodenwand) oder horizontal (Seitenwand) begrenzt, bevorzugt ist letzteres. An die dem Gehäuseinnenraum entgegengesetzte Seite der Gehäusewand legt sich im Zuge des Einbaus des Anschlussgehäuses in den Boden Bodenmaterial an, bspw. Erdreich bzw. Schotter etc. Im Allgemeinen kann das Fitting, wie erwähnt, auch in das Anschlussgehäuse eingeformt sein, bevorzugt ist es jedoch damit zusammengesetzt. Es kann bspw. direkt mit dem Anschlussgehäuse zusammengesetzt sein, also z. B. in ein Loch in einer Gehäusewandwand eingesetzt sein und dabei an dieser Gehäusewandwand anliegen, insbesondere an einer das Loch begrenzenden Laibung der Gehäusewand. Das Fitting kann in dem Loch bspw. axial formschlüssig gehalten sein, z. B. mit einem aufgeschobenen Sicherungsring, der dann an der Innen- oder Außenwandfläche der Wand anliegt. Ebenso kann das Fitting stoffschlüssig in dem Loch befestigt werden z. B. eingeklebt.

In bevorzugter Ausgestaltung ist das Fitting über einen Adapter am Anschlussgehäuse montiert, ist nämlich das Fitting an den Adapter und dieser an das Anschlussgehäuse gesetzt. Das Fitting kann dann das Anschlussgehäuse bspw. auch gar nicht mehr berühren (was aber nicht zwingend ist). Der Adapter kann bspw. ein Rohrstück mit einem endseitigen Flansch sein, der an dem Anschlussgehäuse befestigt wird, z. B. in eine Führung an der Außenwandfläche eingeschoben und/oder mit der Gehäusewand verschraubt oder vernietet wird. In den Rohrabschnitt dieses Adapters ist oder wird das Fitting eingesetzt, es kann bspw. mit einer Überwurfmutter axial in Position gehalten werden.

Die Montage über den Adapter kann z. B. eine Modularität bzw. Flexibilität hinsichtlich unterschiedlicher Leerrohrdurchmesser eröffnen. Um einen zuverlässigen Halt des Leerrohres zu gewährleisten, ist für jeden Außendurchmesser ein entsprechend dimensioniertes Fitting von Vorteil. Diesen unterschiedlichen Fittingen kann dann jeweils ein eigens zugeschnittener Adapter zugeordnet sein, wobei die unterschiedlichen Adapter auf die gleiche Art und Weise an das Anschlussgehäuse angebunden werden. Dies kann z. B. dahingehend von Vorteil sein, dass sich das Anschlussgehäuse, bzw. das entsprechende Teil davon mit den Anschlussstellen, als vereinheitlichtes Bauteil in großer Stückzahl unabhängig von dem später benötigten Hohlrohrdurchmesser herstellen lässt. In Kombination mit dem passenden Fitting und entsprechenden Adapter ist dann vergleichsweise einfach eine Individualisierung und damit Anpassung an die benötigten Leerrohrdurchmesser möglich.

Gemäß einer bevorzugten Ausführungsform ist in einer Wand des Anschlussgehäuses ein Loch vorgesehen, in welches der Adapter eingesetzt ist. Die Wand mit dem Loch kann eine den Gehäuseinnenraum nach unten begrenzende Bodenwand sein, bevorzugt handelt es sich um eine Seitenwand des Anschlussgehäuses, welche den Gehäuseinnenraum horizontal begrenzt. Das Loch kann nach der Herstellung des Anschlussgehäuses bzw. entsprechenden Teils davon, also bspw. nach dem Tiefziehen oder Spritzgießen (siehe unten), im Zuge einer spanenden Nachbearbeitung gesondert eingebracht werden, bspw. durch Fräsen. Es kann aber andererseits auch bereits bei der formenden Herstellung freigehalten oder veranlagt werden. Das Loch kann dabei auch zunächst von einem mitgeformten Blindverschluss verschlossen sein, siehe unten im Detail. Unabhängig davon im Einzelnen kann die durch den Adapter mögliche Vereinheitlichung von Vorteil sein.

Generell beziehen sich "vertikal" und "horizontal" auf die Orientierung der Anschlussgehäusevorrichtung beim Montieren bzw. im montierten Zustand. Die vertikale Richtung kann insbesondere senkrecht zu einer Ebene liegen, in welcher eine Standfläche der Anschlussgehäusevorrichtung, insbesondere des Unterteils (siehe unten) liegt. "Oben" bzw. "unten" beziehen sich auf die vertikale Richtung, und "seitlich" betrifft die horizontale Richtung; "nach innen" meint zum Gehäuseinneren hin, "nach außen" davon weg.

Im Allgemeinen kann der Adapter bspw. auch in dem Loch verschraubt werden, es kann also bspw. ein Rohrabschnitt mit Außengewinde direkt in das Loch eingeschraubt oder eingeschoben und dann mit einer Mutter verschraubt werden. In bevorzugter Ausgestaltung ist der Adapter in dem Loch verrastet, bildet also eine Rastmittel des Adapters einen Hinterschnitt, der ihn axial formschlüssig in dem Loch hält. Das Rastmittel kann bspw. eine Rastnase an einem Steg sein, also einem radial aufgedickten Bereich. Beim Einsetzen des Adapters wird sie temporär nach radial innen gedrückt, um dann wieder nach außen zu springen und die Gehäusewand zu hintergreifen. Axial entgegengesetzt wird der Adapter bevorzugt von einem Flansch gehalten bevorzugt einem axial endseitig am Adapter ausgebildeten Flansch. Dieser kann beim Einsetzen des Adapters bspw. auch zum Aufbringen einer Kraft genutzt werden, also zum Eindrücken des Adapters.

Gemäß einer bevorzugten Ausführungsform ist das Loch axial gesehen mit einer Ausbuchtung vorgesehen, in welcher ein Steg des Adapters angeordnet ist, der die Wand axial formschlüssig hintergreift, bevorzugt mit einer Rastnase. Umlaufend kann es eine Mehrzahl solche Ausbuchtungen und Stege geben, also mindestens 2 und bspw. nicht mehr als 6, besonders bevorzugt sind 3 oder 4 Ausbuchtungen. Durch die Anordnung des Stegs in der Ausbuchtung kann für diesen einerseits radial hinreichend Platz zur Verfügung stehen, kann der Steg also radial etwas dicker und damit stabiler gestaltet werden. Andererseits kann damit auch eine Verdrehsicherung geschaffen werden, kann also der Steg in der Ausbuchtung ein Verdrehen des Adapters verhindern.

Gemäß einer bevorzugten Ausführungsform ist das Loch in der Gehäusewand vor dem Einsetzen des Adapters mit einem Blindverschluss verschlossen, bevorzugt einem über eine Sollbruchstelle einstückig mit der Wand ausgebildeten Blindverschluss. Die Sollbruchstelle kann bspw. ein Wandbereich verringerter Stärke sein, bevorzugt handelt es sich um Stege, die einen bereits abschnittsweise von der Wand getrennten Blindverschluss noch halten. Der Blindverschluss muss das Loch also nicht zwingend dicht verschließen, er kann bspw. im Falle einer Nichtbenutzung einem Eindringen von Schotter oder Nagetieren vorbeugen. Bevorzugt wird die Sollbruchstelle bereits bei der formenden Herstellung des Anschlussgehäuses bzw. Teils davon definiert, also bspw. in einem Spritzgusswerkzeug berücksichtigt. Im Zuge der Montage wird der Blindverschluss herausgetrennt und wird der Adapter in das Loch eingesetzt.

Generell beziehen sich die Angaben "axial", "radial" und "umlaufend", sowie die zugehörigen Richtungen, je nach Gegenstand auf eine Längsachse des Lochs und/oder einer Durchgangsöffnung in dem Adapter. Ist der Adapter in das Loch eingesetzt, fallen die beiden Längsachsen zusammen. Das Loch verbindet das Gehäuseäußere axial mit dem Gehäuseinnenraum.

In bevorzugter Ausgestaltung bildet der Adapter eine Durchgangsöffnung, in welcher das Fitting axial formschlüssig gehalten ist. In einem Axialschnitt betrachtet, also einer die Längsachse der Durchgangsöffnung beinhaltenden Schnittebene, ist das Fitting jedenfalls an einer dem Gehäuseäußeren zugewandten Flanke axial hinter einem Vorsprung des Adapters gehalten, was eine Auszugsicherung schafft (z. B. beim Aufschütten und Verdichten des Bodens, siehe vorne). Bevorzugt ist es auch zum Gehäuseinnenraum hin hinter einem Vorsprung des Adapters gehalten, was bspw. die Montage, also das Ansetzen des Leerrohres vereinfachen kann. Besonders bevorzugt kann derselbe Vorsprung die Sicherung nach axial innen und außen schaffen, dann dieser Vorsprung nämlich in eine Vertiefung in der Außenwandfläche des Fittings eingreifen.

Gemäß einer bevorzugten Ausführungsform umschließt ein für sich einstückiger Abschnitt des Adapters die Durchgangsöffnung, in welcher das Fitting angeordnet ist bzw. wird, über mehr als einen halben Umlauf, ist er dabei jedoch nicht in sich geschlossen. Der für sich einstückige Abschnitt kann sich bspw. über mindestens 270°, 290°, 310° bzw. 330° oder auch vollständig umlaufend (360°) erstrecken und dabei auf einer Seite der Längsachse mit einer Trennfuge geteilt sein, also mit einem Spalt oder Schlitz versehen (bei einer Erstreckung über 360° liegen die Stoßkanten dort aneinander an). Der für sich einstückige Abschnitt kann sich aber bspw. auch über höchstens 355° oder 350° erstrecken.

Die nicht in sich geschlossene Ausgestaltung kann dahingehend von Vorteil sein, dass an der Trennfuge ein temporäres Aufweiten möglich ist, wenn das Fitting eingesetzt wird. Das Aufweiten kann bspw. auch dadurch begünstigt werden, dass an der die Durchgangsöffnung begrenzenden Innenwandfläche des Fittings Längsrillen (axial) vorgesehen werden. Danach wird der Adapter wieder verengt, also die Trennfuge in Richtung ihres Ausgangszustands geschlossen, sodass das Fitting dann axial formschlüssig gehalten ist. Die axial formschlüssige Positionierung des Fittings ist damit auf vergleichsweise einfache und schnelle Weise möglich; dabei ist das Aufweiten des Adapters, wenn dieser in das Loch in der Anschlussgehäusewand eingesetzt ist, aufgrund dieser Einfassung durch den Rand des Lochs gesperrt, sodass das Fitting axial zuverlässig gehalten ist.

"Einstückig" meint generell im Rahmen dieser Offenbarung nicht zerstörungsfrei auftrennbar, bspw. als Spritzgußteil hergestellt (z. B. auch als Mehrkomponenten-Spritzgussteil). Bevorzugt ist nicht nur der die Durchgangsöffnung bildende Abschnitt, sondern der Adapter insgesamt ein einstückiges Teil, besonders bevorzugt ein monolithisches Teil. Letzteres meint frei von Materialgrenzen im Inneren, also unterbrechungsfrei durchgehend aus demselben Material geformt, bspw. als Einkomponenten-Spritzgussteil.

Gemäß einer bevorzugten Ausführung wird bei der Montage, wenn also Fitting, Adapter und Anschlussgehäuse zusammengesetzt werden, zunächst das Fitting in den Adapter eingesetzt und danach der Adapter gemeinsam mit dem Fitting an das Anschlussgehäuse gesetzt, vorzugsweise in das Loch in der Anschlussgehäusewand eingeschoben. Mit dem Ansetzen bzw. Einschieben des Adapters wird bevorzugt die Axialfixierung des Fittings in der Durchgangsöffnung des Adapters arretiert, vergleiche auch die vorstehenden Anmerkungen. Vor dem An- bzw. Einsetzen des Adapters lässt sich das Fitting gut in den Adapter einsetzen (Aufdehnen der Trennfuge), danach ist es zuverlässig darin gehalten. Dies ließe sich alternativ zu der vorstehend beschriebenen, einseitig geschlitzten Variante bspw. auch mit einem zweigeteilten, aus zwei Halbschalen zusammengesetzten Adapter erreichen. Diese werden um das Fitting zusammengesetzt und halten es dann formschlüssig, wobei aufgrund ihrer Positionierung in dem Loch dann auch die Halbschalen beisammengehalten sind.

In bevorzugter Ausgestaltung ist das Fitting in dem Adapter verdrehsicher gehalten. Dies könnte im Allgemeinen bspw. auch mit einem Kraftschluss, also durch eine Klemmung erreicht werden. Bevorzugt ist das Fitting in der Durchgangsöffnung des Adapters axial und auch bezogen auf die Umlaufrichtung formschlüssig gehalten. Dies wird bevorzugt durch einen Formschluss zwischen einer Außenwandfläche des Fittings und einer dieser zugewandten Innenwandfläche des Adapters erreicht; die beiden Wandflächen haben in einem zur Längsachse senkrechten Schnitt betrachtet eine nicht kreisrunde und dabei komplementäre, die Verdrehung blockierende Kontur.

Gemäß einer bevorzugten Ausführungsform stehen mehrere unterschiedliche Adapter zur Auswahl, die jedoch hinsichtlich ihrer Schnittstelle zum Anschlussgehäuse baugleich sind. Im Falle des in das Loch in der Gehäusewand eingesetzten Adapters haben sie also bspw. den gleichen Außendurchmesser und bevorzugt auch die gleichen Rastmittel, also bspw. die gleiche Anordnung von Stegen mit Rastnasen. Die Adapter unterscheiden sich jedoch dahingehend, dass sie zur Aufnahme unterschiedlicher Fittinge ausgelegt sind. Sie können bspw. jeweils eine Durchgangsöffnung zur Aufnahme eines jeweiligen Fittings bilden (siehe vorne), wobei sich diese Durchgangsöffnungen in ihren Durchmessern unterscheiden.

Die unterschiedlichen Fittinge können sich dann ihrerseits hinsichtlich des Durchmessers des jeweilig angesetzten Leerrohrs unterscheiden, typische Durchmesser können bspw. bei 7 mm, 10 mm und 12 mm liegen (Außendurchmesser). Die Erfinder haben festgestellt, dass es von Vorteil sein kann, zur Datenkabel-Verzweigungsstelle hin ein dünneres Leerrohr zu verlegen, z. B. weil in dem Strang viele Leerrohre zusammenlaufen und dieser damit kompakt gehalten werden kann. Andererseits stört ein kleiner Durchmesser an dieser Stelle auch nicht, weil sich z. B. ein Glasfaserkabel auch durch ein vergleichsweise dünnes Leerrohr einblasen lässt. Bei der Verbindung zwischen Anschlussgehäuse und Nutzer/Verteiler, also bspw. Wohngebäude, kann hingegen ein Leerrohr mit größerem Durchmesser von Vorteil sein (im Vergleich zu der Verbindung Verzweigungsstelle-Anschlussgehäuse), weil sich dort dann bspw. auch ein Kabel mit einem Stecker bzw. einem zum Ansetzen eines Steckers vorkonfektionierten Ende verlegen lässt.

Generell wird bei einer bevorzugten Ausführungsform zum einen das Leerrohr zwischen der Datenkabel-Verzweigungsstelle und dem Anschlussgehäuse verlegt und wird ferner zwischen dem Anschlussgehäuse und der Datennutzer- oder - verteilerstelle ebenfalls ein Leerrohr verlegt, nachstehend als "Anschluss-Leerrohr" bezeichnet. Im fertig montierten Zustand verläuft in dem Anschluss-Leerrohr dann das Datenkabel, welches den Nutzer/Verteiler letztlich anbindet. Je nach Anwendung kann es sich dabei um das von der Datenkabel-Verzweigungsstelle kommende Datenkabel selbst handeln, das durchgeschleift wird, oder um ein weiteres Datenkabel, das in dem Anschlussgehäuse mit dem Datenkabel der Datenkabel-Verzweigungsstelle verbunden wird, siehe unten im Detail. Bevorzugt sind hierbei sowohl das Leerrohr zur Verzweigungsstelle als auch das Anschluss-Leerrohr jeweils über ein Fitting an das Anschlussgehäuse angebunden, besonders bevorzugt jeweils über ein mittels eines Adapters am Anschlussgehäuse montiertes Fitting. Sämtliche hinsichtlich Fitting und Adapter im Kontext des ersten Leerrohrs offenbarten Merkmale sollen auch hinsichtlich des Anschluss-Leerrohrs offenbart sein.

Gemäß einer bevorzugten Ausführungsform haben das erste Leerrohr und das Anschluss-Leerrohr unterschiedliche Außendurchmesser. Dies erlaubt eine Optimierung auf die jeweilige Anforderung, es kann bspw. das erste Leerrohr einen kleineren Durchmesser als das Anschluss-Leerrohr haben, siehe oben. Bevorzugt sind die Leerrohre mit unterschiedlichen Durchmessern dann jeweils über ein Fitting mit dem Anschlussgehäuse verbunden, bevorzugt jeweils mit einem von einem Adapter gehaltenen Fitting. Diese Adapter haben bevorzugt jeweils die gleiche Schnittstelle zum Anschlussgehäuse, halten jedoch die unterschiedlichen Fittinge, siehe vorne.

Generell kann das Fitting und/oder der an das Anschlussgehäuse gesetzte Adapter gegen das Anschlussgehäuse gedichtet sein. Dazu kann der Adapter bspw. als Mehrkomponenten-Spritzgußteil vorgesehen sein und eine angespritzte Dichtkomponente aufweisen (z. B. aus TPE), welche ein sich an das Anschlussgehäuse anlegendes Dichtelement und/oder ein sich an das Fitting anlegendes Dichtelement bildet. Gleichermaßen kann der Adapter mit einem oder mehreren Dichtelementen zusammengesetzt sein, die gegen das Anschlussgehäuse und/oder das Fitting dichten. Eine solche Abdichtung ist aber andererseits nicht obligatorisch, Adapter und/oder Fitting können relativ zum Anschlussgehäuse auch ungedichtet sein. Von Bedeutung sind vor allem die Halte- und Kabelverlegefunktionen des Fittings. Etwaiges über ein ungedichtetes Loch mit Fitting in den Gehäuseinnenraum eindringendes Wasser kann bspw. auch wieder ablaufen (z. B. durch Öffnungen im Boden des Gehäuses).

Das Fitting weist bevorzugt ein Dichtelement auf, mit dem ein in dem Leerrohr durch das Fitting hindurch in den Gehäuseinnenraum verlegtes Kabel gegen das Innenvolumen des Leerrohres gedichtet wird. Bevorzugt weist das Fitting ein Spannmittel auf, mit dem das Dichtelement verspannt und damit gegen das Kabel angedrückt werden kann. Das Spannmittel, insbesondere die Überwurfmutter, wird vom Gehäuseinnenraum her betätigt. Das Dichtelement wird hierzu bevorzugt axial komprimiert, um sich infolgedessen nach radial innen dichtend gegen das Kabel anzulegen. Die axiale Kompression wird z. B. mit einer Überwurfmutter erreicht, die an auf dem Gehäuse des Fittings geführt ist, z. B. auf einem Außengewinde. Der Kraftübertrag auf das Fitting kann bspw. mit einem nach innen eingestellten Kragen der Überwurfmutter erreicht werden. Besonders bevorzugt kann eine Kombination mit dem verdrehsicher gehaltenen Fitting sein, weil dieses dann für die Betätigung des Spannmittels nicht noch zusätzlich festgehalten werden muss, also auch eine einhändige Montage möglich ist (der Monteur muss nur mit einer Hand in das in den Boden eingebaute Anschlussgehäuse hineingreifen).

Wie nachstehend im Einzelnen diskutiert, wird bzw. ist bevorzugt ein Kabelgehäuse in dem Anschlussgehäuse angeordnet. In bzw. an dem Kabelgehäuse kann eine Verbindung mit einem weiteren Datenkabel (das z. B. zum Nutzer/Verteiler verläuft) hergestellt werden, etwa eine Spleiß- oder Steckverbindung. Bevorzugt kann ein Kabelgehäuse sein, in dessen Inneren eine Spleißverbindung hergestellt wird, über welche das Datenkabel mit einem Stecker verbunden ist. Im Innenraum des Kabelgehäuses kann es Mittel zum schleifenförmigen Ablegen und/oder Herstellen einer Auszugssicherung geben.

Im Allgemeinen kann das Kabelgehäuse bspw. auch für sich wasserdicht ausgeführt sein. Bevorzugt wird bzw. ist das Kabelgehäuse in einen Dichtbehälter eingesetzt, besonders bevorzugt einen topfförmigen Dichtbehälter. Dieser hat also einen Boden und entgegengesetzt eine offene Seite (diese wird in das Kabelgehäuse eingesetzt) und wird bevorzugt mit dem Boden nach oben im Anschlussgehäuse platziert (im ortsfesten Koordinatensystem betrachtet). Der topfförmige Dichtbehälter ist also nach oben hin abgeschlossen, sodass das Kabelgehäuse in einem Luftvolumen gehalten ist, also auch bei ansteigendem Wasser trocken bleibt. Die Verwendung eines Dichtbehälters kann Flexibilität dahingehend schaffen, dass anwendungsabhängig unterschiedliche Kabelgehäuse eingesetzt werden können, die zudem für sich keine wasserdichten Spezialausführungen sein müssen (es können einfache Innenraumgehäuse verwendet werden).

Gemäß einer bevorzugten Ausführungsform wird bzw. ist an eine dem gehäuseaußenseitigen Leerrohr entgegengesetzte Seite des Fittings ein gehäuseinnenseitiges Leerrohr gesetzt. Bevorzugt hat dieses zumindest abschnittsweise eine gewellte Außenwandfläche und/oder eine Spiralform. In einem Axialschnitt betrachtet (Schnittebene beinhaltet Rohrachse) verläuft eine solche gewellte Außenwandfläche mit Erhebungen und Vertiefungen, also wellenförmig; bevorzugt ist die Innenwandfläche komplementär dazu gewellt. Das gewellte Rohr kann wegen seiner Flexibilität von Vorteil sein, es lässt sich in dem Anschlussgehäuse komfortabel ablegen, bspw. in Schleifenform. Gleiches gilt für das Spiralrohr, das aus seiner Spiralform, die bspw. mittels einer Wärmebehandlung vorgegeben sein kann, ausgezogen werden kann und diese dann wieder selbsttätig einnimmt. Auch das Spiralrohr lässt sich besonders gut im Gehäuseinnenraum ablegen. Dies gilt insbesondere im Vergleich zu einem relativ starren Pipe, das bevorzugt als Leerrohr außerhalb des Anschlussgehäuses Anwendung findet.

Bei dem gewellten Leerrohr können die Erhebungen und Vertiefungen im Allgemeinen auch spiralförmig um die Längsachse des Leerrohres umlaufen, vorzugsweise handelt es sich jedoch um ein Wellrohr, das entlang seiner Erstreckung einen variierenden, also wiederholt zu- und abnehmenden Durchmesser hat (außen und innen). Diese Variation ist bevorzugt zumindest in Abschnitten periodisch, dazwischen kann es andere Abschnitte geben, die bspw. bestimmte Längen markieren und so ein Einkürzen etc. vereinfachen. Das Wellrohr kann aber auch über seine Gesamterstreckung periodisch gewellt sein. Generell soll "Rohr" keine Implikation hinsichtlich einer bestimmten Steifigkeit haben, die Begriffe Well- und Spiralrohr umfassen also auch Well- und Spiralschläuche. Es ist auch eine Kombination aus Well- und Spiralrohr möglich, das also eine gewellte Außenwandfläche hat und zugleich insgesamt spiralförmig ist. Im Allgemeinen kann das Well- oder Spiralrohr auch über einen Adapter an dem Fitting befestigt werden, der z. B. auf dessen Überwurfmutter gesetzt wird und seinerseits das gewellte Leerrohr formschlüssig hält. Bevorzugt wird das Well- oder Spiralrohr jedoch in das Fitting eingeschoben, also vom Gehäuseinnenraum her. Vorzugsweise wird bzw. ist auch an dem Fitting des Anschluss-Leerrohrs ein Well- und/oder Spiralrohr zur Verlängerung im Gehäuseinnenraum angesetzt.

Von dem schleifenförmigen Ablegen abgesehen kann ein gewelltes Rohr, insbesondere Wellrohr, bspw. auch dahingehend von Vorteil sein, dass die gewellte Außenwandfläche in einem Steckfitting mit Arretierung zuverlässig gehalten sein kann und zudem auch eine Montagekontrolle insofern eröffnet, als es beim Einschieben ein "Klick"-Geräusch geben kann (was aufgrund der begrenzten Zugänglich- bzw. Sichtbarkeit im Gehäuseinnenraum von besonderem Vorteil sein kann). Generell, auch unabhängig von dem gewellten Rohr, ist das Fitting gehäuseinnenseitig bevorzugt als Steckfitting mit Arretierung ausgebildet, besonders bevorzugt sowohl gehäuseinnenseitig als auch gehäuseaußenseitig (siehe vorne, auch bzgl. möglicher Definitionen/Konkretisierungen, Auszugkraft etc.)

Gemäß einer bevorzugten Ausführungsform erstreckt sich das gewellte und/oder Spiralrohr von dem Fitting zu einem im Anschlussgehäuse angeordneten Kabelgehäuse und/oder Dichtbehälter, vorzugsweise einem Dichtbehälter (z. B. in Topfform, siehe unten im Detail), in dem ein Kabelgehäuse angeordnet ist. Das dem Fitting entgegengesetzte Ende des gewellten und/oder Spiralrohrs ist bzw. wird dabei relativ zu dem Kabelgehäuse und/oder Dichtbehälter lagefixiert, bspw. an einem Ansetzteil befestigt, das an das offene Ende des Dichtbehälters gesetzt wird (und vorzugsweise damit verrastet wird). Das Ende des gewellten und/oder Spiralrohrs kann z. B. mittels einer Klemme oder mit einem weiteren Fitting befestigt werden, vorzugsweise an dem Ansetzteil. Das gewellte und/oder Spiralrohr kann hierbei insbesondere einem Abknicken des Datenkabels vorbeugen, und es kann dieses im fertig montierten Zustand auch dauerhaft schützen.

Generell hat das gehäuseinnenseitig an das Fitting gesetzte Leerrohr, also bevorzugt das gewellte und/oder Spiralrohr, in bevorzugter Ausgestaltung eine Überlänge. Bei einem solchen Leerrohr mit "Überlänge", dessen Ende z. B. relativ zu dem Dichtbehälter und/oder Kabelgehäuse lagefixiert ist, können Montagearbeiten vorteilhafterweise derart erfolgen, dass der Dichtbehälter und/oder das Kabelgehäuse mit dem daran (und am Fitting des Anschlussgehäuses) befestigten Leerrohr nach oben aus dem Anschlussgehäuse herausgenommen werden kann bzw. können. Es kann also bspw. der Dichtbehälter samt angesetztem Leerrohr herausgehoben und dann komfortabel, also nicht unter beengten Raumverhältnissen mit den eigentlichen Kabelarbeiten begonnen werden, was z. B auch einer Beschädigung des Datenkabels vorbeugen kann. Dieses ist beim Herausheben nämlich im Leerrohr geschützt. Außerhalb des Anschlussgehäuses ist dann die Handhabung vereinfacht, es kann also bspw. der Dichtbehälter und/oder das Kabelgehäuse geöffnet bzw. das Well- und/oder Spiralrohr abgenommen werden.

Die vorstehend diskutierte Ausführungsform mit der Datenkabelführung in einem Well- und/oder Spiralrohr im Gehäuseinnenraum, das vorzugsweise mit einer Überlänge vorgesehen ist, kann auch unabhängig von der hauptanspruchsgemä-ßen Verwendung eines Fittings von Interesse sein und soll entsprechend offenbart sein. Das Well- und/oder Spiralrohr kann z. B. zwar zur gehäuseinnenseitigen Verlängerung an ein im Erdreich bzw. Boden verlaufendes Leerrohr angesetzt sein, diese Verbindung zwischen den Rohren kann jedoch in einem einfachen Fall bspw. mit einem Klebeband hergestellt sein. Ebenso ist eine Verbindung mit einem Fitting möglich, das aber nicht zwingend am Anschlussgehäuse montiert ist.

Gegenstand der Offenbarung ist also auch eine Verwendung einer Anschlussgehäusevorrichtung zum Bereitstellen einer Datenkabelanbindung für eine Datennutzer- oder Datenverteilerstelle, und zwar einer Anbindung an eine Datenkabel-Verzweigungsstelle, welche Anschlussgehäusevorrichtung ein Anschlussgehäuse aufweist, das einen Gehäuseinnenraum begrenzt, der über eine Öffnung in dem Anschlussgehäuse zugänglich ist, bei welcher Verwendung das Anschlussgehäuse zwischen der Datennutzer- oder Datenverteilerstelle solchermaßen in den Boden eingebaut wird, dass der Gehäuseinnenraum von oben über die Öffnung in dem Anschlussgehäuse zugänglich ist, und bei welcher Verwendung ferner ein Leerrohr zwischen der Datenkabel-Verzweigungsstelle und dem Anschlussgehäuse in dem Boden verlegt wird, wobei das Leerrohr mit einem Well- und/oder Spiralrohr verbunden ist oder wird, in dem ein durch das Leerrohr verlegtes Datenkabel in dem Gehäuseinnenraum geführt ist.

Das erfindungsgemäße Vorgehen ist nicht nur bei der eingangs diskutierten Erschließung im Bestand, sondern auch im Neubau von Vorteil. In einem Neubaugebiet mag es zwar auf den ersten Blick weniger aufwendig und kostengünstiger erscheinen, die einzelnen Gebäude bzw. Gebäudegrundflächen jeweils direkt anzuschließen, also das Datenkabel bzw. Leerrohr dafür von der Datenkabel-Verzweigungsstelle direkt bis zum Gebäude bzw. dessen Grundfläche zu verlegen. Die Erfinder haben jedoch festgestellt, dass der Baufortschritt auf den einzelnen Grundstücken in der Praxis erheblich divergieren kann, sodass einige Gebäude bspw. schon bezogen werden, während sich andere noch im Rohbaustadium befinden, wenn überhaupt. Der Netzbetreiber kann deshalb nicht in einem Zug das gesamte Gebiet erschließen, sondern wiederum nur nach und nach.

Das erfindungsgemäße Vorgehen eröffnet auch hier eine Möglichkeit der Vorverlegung, bspw. bis an das jeweilige Grundstück. Die Anschlussgehäuse können, wo später die Straße, insbesondere der Gehweg, verläuft platziert werden oder auf den Grundstücken, bspw. an den Grundstückgrenzen. Unabhängig von ihrer Position im Einzelnen kann der Netzbetreiber die einzelnen Datenkabel (für die einzelnen Gebäude bzw. Gebäudegrundflächen) dann in einem Zug bis in die Anschlussgehäuse verlegen, also in einem Arbeitsdurchgang (innerhalb eines Arbeitstages oder mehrerer zusammenhängender). Dieses Vorverlegen bis in die Anschlussgehäuse kann bspw. erfolgen, sobald der erste Haushalt seinen Datenanschluss erhält. Benötigen dann nach und nach die übrigen Haushalte ihren Datenanschluss, ist der Aufwand für die Verlegung dieser letzten Meter deutlich geringer als das Verlegen von der Datenkabel-Verzweigungsstelle aus bzw. über diese. Letzteres erfordert nämlich in der Regel mindestens zwei Techniker, die letzten Meter können auch von einem einzelnen Techniker verlegt werden.

Generell werden die Datenkabel bevorzugt von einem Knotenpunkt aus verlegt, an dem mehrere, also die einzelnen Datenkabelverzweigungsstellen zusammenlaufen. Von diesem Knotenpunkt kann sich z. B. ein Kabel- bzw. Leerrohrstrang entlang der Straße erstrecken (im Erdreich), wobei an den Gebäuden (bzw. allgemein Nutzern/Verteilern) jeweils ein Kabel/Leerrohr abgeht. An dem übergeordneten Knotenpunkt kann bspw. ein Verteilerkasten (Spleißkasten) oder eine Spleißmuffe angeordnet sein. Zwischen dem Knotenpunkt und den einzelnen Gebäuden (Nutzern/Verteilern) kann eine gewisse Wegstrecke liegen, und die Datenkabel werden in der Regel mit einem Spezialwerkzeug in die Leerrohre eingeblasen und damit über entsprechend große Strecken vorgeschoben. In dieser Hinsicht kann das vorstehend geschilderte Vorgehen, also das Vorverlegen vorerst nicht benötigter Datenkabel in einem Arbeitsgang, insoweit von Vorteil sein, als dann das entsprechende Spezialwerkzeug (Einblasvorrichtung) nur einmal an dem Knotenpunkt bereitgestellt werden muss. Die Arbeiten am Knotenpunkt können auch hinsichtlich der Kabelverbindung/-verzweigung dort Spezialwerkzeug erfordern, bspw. einen Kabelspleißer im Falle der bevorzugten Glasfaserkabel. Auch dieser muss dann nur einmal samt entsprechend geschultem Personal bereitgestellt werden, jedenfalls am Knotenpunkt (mitunter auch generell, vgl. insbesondere die Variante "Stecker").

Im Falle eines Gebäudes als Nutzer/Verteiler sitzt das im Boden angeordnete Anschlussgehäuse außerhalb der Gebäudegrundfläche, also außerhalb der von dem Gebäude eingenommenen Fläche inklusive der Wände, also der nach den Außenmaßen genommene Brutto-Grundfläche. Diese kann kleiner sein als die überbaute Fläche (Dachüberstand). Das Anschlussgehäuse wird zwar außerhalb der Grundfläche platziert, kann jedoch durchaus innerhalb der überbauten Fläche liegen, bspw. im Falle eines direkt an der Gebäudeaußenwand platzierten Anschlussgehäuses. Letzteres kommt insbesondere bei einer Nachrüstung im Bestand in Betracht. Andererseits kann jedoch auch ein gewisser Mindestabstand zur Gebäudegrundfläche bevorzugt sein, bspw. von mindestens 1 m, 2 m bzw. 3 m. Mögliche Obergrenzen, die im Einzelnen auch von der Grundstücksgröße abhängen, können bspw. bei höchstens 50 m, 40 m, 30 m, 20 m, 15 m bzw. 10 m liegen.

Generell wird das Anschlussgehäuse in den Boden eingebaut, sodass die Öffnung nach Herstellung des Bodenaufbaus noch von oben zugänglich ist. Im fertig eingebauten Zustand liegt eine Oberkante des Anschlussgehäuses bevorzugt im Wesentlichen bündig mit einer Oberkante des Bodenaufbaus, bspw. um weniger als 3 cm, 2 cm bzw. 1 cm versetzt (im Rahmen der technisch üblichen Genauigkeit ist ein exakt bündiger Einbau bevorzugt, 0 cm). Bei dem Bodenaufbau kann es sich bei einer Platzierung im Gartenbereich z. B. um eine Mutterboden-/Humusschicht handeln, ebenso kann das Anschlussgehäuse in Schüttgut, wie z. B. Kies eingebettet werden. Ferner ist auch ein Eingießen möglich, kann um das Anschlussgehäuse herum also bspw. Beton aufgefüllt werden. Bevorzugt kann eine Positionierung des Anschlussgehäuses horizontal im Bereich einer Straße sein, sodass das Anschlussgehäuse mit dem Schichtaufbau der Straße vertikal fluchtend angeordnet ist. Ist die Straße fertiggestellt, sitzt das Anschlussgehäuse dann in dem Schichtaufbau der Straße (weil es zudem auf einer vertikalen Höhe innerhalb der fertigen Schichtaufbauhöhe platziert wird).

Der "Schichtaufbau" der Straße umfasst z. B. eine Tragschicht, wobei auch mehrere aufeinandergesetzte Tragschichten möglich sind. Das Baustoffgemisch der Tragschicht kann insbesondere Schotter umfassen, dieser wird verdichtet. Darauf kommt eine Deckschicht, bspw. Asphalt oder Platten bzw. Pflastersteine, im Allgemeinen ist jedoch bspw. auch eine ungebundene Deckschicht möglich (eine Schotterschicht im Falle eines Schotterwegs). Das Platzieren im Schichtaufbau der Straße ist bspw. insoweit von Vorteil, als diese Schicht(en) verdichtet ist bzw. sind, also eine gute mechanische Stabilität bieten. Dies kann im vorliegenden Zusammenhang von Interesse sein, weil die Datenkabel bzw. die vergleichsweise dünnen Leerrohre dafür relativ empfindlich sind (Beschädigungsgefahr bei Setzungen). Der Schichtaufbau der Straße wird definiert verdichtet, was z. B. mit einem dynamischen Plattendruckgerät und/oder einer Rammsonde (Gleichmäßigkeit der Verdichtung) überprüft werden kann (bzw. im Straßenbau überprüft wird) und dem Anschlussgehäuse zuverlässig Halt schafft.

Bei der Montage bzw. Herstellung des Schichtaufbaus der Straße wird dann also seitlich um das Anschlussgehäuse herum z. B. eine Schotterschicht verdichtet, etwa mit einer Rüttelplatte. Bevorzugt gibt es mehrere aufeinander gesetzte, also nacheinander hergestellte Schotterschichten, die jeweils um das Anschlussgehäuse herum verdichtet werden. Das Anschlussgehäuse ist dann, speziell nach Aufbringen der Deckschicht, definiert und stabil eingebaut. Der Begriff "Straße" umfasst hierbei sowohl die Fahrbahn als auch den Gehweg, weitere Bestandteile können ein Radweg und auch Mittel- bzw. Seitenstreifen (Überland/Autobahn) sein. Prinzipiell kann das Anschlussgehäuse bei einer Positionierung im Straßenbereich in jedem der genannten Bereiche platziert werden (im Bereich der Fahrbahn oder des Radwegs oder des Mittel-/Seitenstreifens oder des Gehwegs), bevorzugt ist bei einer üblichen Bebauung im örtlichen/städtischen Bereich eine Positionierung im Bereich des Gehwegs, besonders bevorzugt an der Grundstücksgrenze (am Straßenrand).

Mit Blick auf die bevorzugten Glasfaserkabel, die bestimmte minimale Biegeradien haben (Bruchgefahr), kann die Öffnung des Anschlussgehäuses bevorzugt gewisse Mindestmaße haben. Eine mittlere Öffnungsweite, die sich als Mittelwert der größten und kleinsten horizontalen Erstreckung der Öffnung ergibt und im bevorzugten Fall der Kreisform dem Kreisdurchmesser entspricht, kann bspw. bei mindestens 5 cm liegen, weiter und besonders bevorzugt mindestens 10 cm bzw. 12 cm. Mögliche Obergrenzen können (davon unabhängig) bspw. bei höchstens 40 cm, 30 cm bzw. 25 cm liegen. Der Deckel ist dann der Öffnung entsprechend bemessen.

Wie vorstehend dargelegt, können sich vielfältige Vorteile ergeben, wenn die "Datennutzer- oder -verteilerstelle" ein Gebäude ist, bspw. ein Büro- oder Wohngebäude, wobei sowohl ein Mehrfamilienhaus als auch insbesondere ein Einfamilienhaus infrage kommt. Bei der "Datennutzer- bzw. -verteilerstelle" kann es sich jedoch auch um eine Antennenstation bzw. -einheit handeln, bspw. für öffentliches WLAN. Eine solche Antenneneinheit kann für sich (freistehend) vorgesehen sein, sie kann aber bspw. auch Teil einer Straßenlaterne oder Ampel sein (angesetzt oder auch baulich integriert).

Im fertig montierten Zustand ist die Antenneneinheit dann mittels des Datenkabels über die Datenkabel-Verzweigungsstelle mit dem Knotenpunkt verbunden, über das Datenkabel werden Daten zu und auch von der Antenneneinheit übertragen, diese setzt das drahtgebundene Signal in ein Funksignal um. Dies kann auch ein Mobilfunksignal sein, es kann sich bei der Datennutzer- oder -verteilerstelle also bspw. auch um eine Mobilfunkstation handeln (z. B. für 5G). Eine solche Datennutzer- bzw. -verteilerstelle kann auch ein Technikgebäude umfassen, durch welches das Datenkabel geführt wird. Das Anschlussgehäuse wird dann außerhalb dieses Technikgebäudes platziert, vgl. die vorstehenden Anmerkungen.

Prinzipiell können sich bei der Anwendung "Antenneneinheit bzw. -station" dieselben Vorteile ergeben, wie vorstehend anhand der Gebäude geschildert. Wird bspw. ein Ortsteil bzw. Straßenzug erschlossen (die Straße aufgegraben und ein Leerrohrstrang verlegt, vgl. im Detail die vorstehenden Anmerkungen zum "Bestand"), ist nicht nur für die Büro-/Wohngebäude eine Vorverlegung möglich, sondern bspw. auch zur Errichtung eines öffentlichen WLAN-Netzes. Dazu kann ein jeweiliges Anschlussgehäuse bspw. an, also neben einer Laterne platziert werden, bevorzugt direkt neben dem Laternenpfosten bzw. einem Sockel. Die Laterne kann dann später für die Antenneneinheit eine Halterungsfunktion übernehmen, zudem ist dort auch Stromanschluss verfügbar (für den Umsetzer bzw. Konverter). Es können aber auch andere Stellen entlang der Straße, als spätere Antennenposition veranlagt werden. Durch ein entsprechendes Platzieren von Anschlussgehäusen entlang der Straße, bspw. bei jeder oder jeder n-ten Laterne, kann ein Aufbau eines solchen WLAN-Netzes veranlagt werden. Es muss dann später nicht nochmals gesondert aufgegraben werden, vgl. die vorstehenden Anmerkungen. Auch wenn der Aufbau des WLAN-Netzes bereits beschlossen ist, können die z. B. bei den Laternen oder auch anderen Stellen entlang der Straße platzierten Anschlussgehäuse das Prozedere vereinfachen. Analog der vorstehenden Schilderung können die Datenkabel nämlich in einem Arbeitsgang vom Knotenpunkt zu den einzelnen Anschlussgehäusen verlegt werden, die eigentliche Montage, z. B. an den einzelnen Laternen, kann dann nach und nach erfolgen.

Wie bereits erwähnt wird zwischen der Datenkabel-Verzweigungsstelle und dem Anschlussgehäuse bevorzugt ein Leerrohr verlegt, das dann bspw. als Option zunächst unbelegt bleiben oder gleich zum Verlegen des Datenkabels genutzt werden kann. Das Leerrohr kann bspw. einen Außendurchmesser von höchstens 30 mm, 25 mm, 20 mm bzw. 15 mm haben (eine mögliche Untergrenze kann bspw. bei mindestens 7 mm bzw. 10 mm liegen). Bei einer Wandstärke von 1-2 mm steht ein Innenquerschnitt zur Verfügung, in dem das Datenkabel gut geführt ist. Das Leerrohr ist bevorzugt aus einem Kunststoffmaterial vorgesehen. Wird der Bodenaufbau hergestellt, legt sich das Bodenmaterial bevorzugt direkt an eine Außenmantelfläche des Leerrohres an, berührt es diese also.

Generell wird das Leerrohr auf einer Höhe innerhalb der fertigen Schichtaufbauhöhe der Straße bzw. des Bodens verlegt, also unterhalb der Oberkante der fertigen Deckschicht (Pflaster/Platten bzw. Asphalt). Es kann bspw. mindestens 10 cm, 20 cm, 30 cm bzw. 40 cm unterhalb letzterer verlaufen, mit möglichen Obergrenzen bei höchstens 1,5 m, 1,2 m bzw. 1 m. Bevorzugt liegt das Leerrohr über die gesamte Strecke zwischen Datenkabel-Verzweigungsstelle und Anschlussgehäuse im Erdreich, also unterhalb der Oberkante des Schichtaufbaus.

Wenn das Leerrohr belegt wird, kann das Datenkabel bspw. mit einer Überlänge in das Anschlussgehäuse verlegt werden. Im fertig in das Anschlussgehäuse verlegten Zustand soll z. B. dann ein Endabschnitt des Datenkabels eine Länge von mindestens 1 m haben, wobei mindestens 2 m, 3 m, 4 m, 5 m, 6 m, 7 m, 8 m, 9 m bzw. 10 m weitere bevorzugte Untergrenzen sind. Mögliche Obergrenzen können bspw. höchstens 30 m, 20 m bzw. 15 m liegen. Konkret wird diese Länge zwischen der Eintrittsstelle, an welcher das Datenkabel aus dem Leerrohr in das Gehäuseinnere eintritt, bis zum Ende des Datenkabels genommen (dem Ende, das außerhalb des Leerrohres liegt, das also in einer Richtung von der Datenkabel-Verzweigungsstelle zu dem Anschlussgehäuse liegt).

Bei einer Variante kann die Überlänge, also der Endabschnitt, dann vorübergehend in dem Anschlussgehäuse, also im Gehäuseinneren abgelegt werden. Dazu wird der Endabschnitt bevorzugt in Schleifenform gebracht, womit sich zuverlässig minimale Biegeradien nicht unterschreiten lassen. Stege bzw. Haken, deren Abstand zueinander die Größe der Schleifenform vorgibt, können bspw. in einem Dichtbehälter und/oder einem Kabelgehäuse vorgesehen sein. Eine entsprechende Halterung für die Schleife kann aber bspw. auch an der Gehäuseinnenwand des Anschlussgehäuses selbst vorgesehen sein, ebenso ist eine herausnehm- und wiedereinsetzbare Kassette möglich.

Bevorzugt wird die Öffnung des Anschlussgehäuses nach dem schleifenförmigen Ablegen des Endabschnitts verschlossen, wird also der Deckel auf- bzw. eingesetzt. Wird das Datenkabel nur kurzzeitig abgelegt und bspw. noch am selben Arbeitstag weiter zum Gebäude bzw. Nutzer/Verteiler verlegt, kann auch ein schleifenförmiges Ablegen ohne Verschließen des Deckels Vorteile bieten, kann das Datenkabel nämlich in dem Gehäuseinneren etwas geschützt sein.

Die Verlegung zwischen Anschlussgehäuse und Gebäude bzw. Nutzer/Verteiler erfolgt bevorzugt ebenfalls im Erdreich, besonders bevorzugt wird hierfür zunächst wiederum ein Leerrohr (Anschluss-Leerrohr) verlegt, durch welches dann das Datenkabel geschoben werden kann. Bezüglich bevorzugter Details des "Anschluss-Leerrohres" wird auf die vorstehende Offenbarung zum "Leerrohr" verwiesen. Im Zuge einer Nachbelegung muss hierfür zwar ggf. nochmals ausgegraben werden, allerdings nur auf dem Grundstück, nicht im öffentlichen Raum (Gehweg/Straße), was einen entsprechend geringeren Aufwand bedeutet. Ist das Anschlussgehäuse direkt an der Außenwand platziert, muss mitunter auch gar kein Anschluss-Leerrohr verlegt werden, sondern kann der mit Überlänge im Anschlussgehäuse vorgehaltene Endabschnitt direkt in das Gebäude hinein verlegt werden (durch dessen Außenwand hindurch).

Generell kann das Datenkabel bzw. der Endabschnitt auch derart von dem Anschlussgehäuse zum Gebäude verlegt werden, dass das Ende des Endabschnitts dann im Gebäude liegt. Dort liegt also der Abschlusspunkt der Linientechnik. In diesem Fall erstreckt sich das Datenkabel dann unterbrechungsfrei von diesem im Gebäudeinneren über das Anschlussgehäuse zu der Datenkabel-Verzweigungsstelle (in der Regel über diese hinaus bis zu einem Knotenpunkt). "Unterbrechungsfrei" meint insoweit ohne Verbindungstelle dazwischen (insbesondere ohne Spleißstelle). Dieses Vorgehen kann bspw. insoweit von Vorteil sein, als dann in dem Anschlussgehäuse keine "komplexeren" Arbeiten am Datenkabel erforderlich sind, also bspw. kein Spleißgerät zu dem Anschlussgehäuse geschafft werden muss. Das Kabelgehäuse wird dann bspw. nur temporär zum Ablegen einer Überlänge genutzt.

Bei einer alternativ bevorzugten Ausführungsform wird das Anschlussgehäuse genutzt, um dort eine Verbindungsstelle herzustellen. Das Datenkabel, das sich von der Datenkabel-Verzweigungsstelle bis in das Anschlussgehäuse erstreckt, kann dort ebenfalls eine gewisse Überlänge haben, bspw. von mindestens 0,5 m, 1 m bzw. 1,5 m, was das Arbeiten vereinfachen kann. Die Überlänge wird dann jedoch typischerweise geringer als im vorherigen Beispiel sein, sie kann z. B. höchstens 5 m, 4 m, 3 m bzw. 2 m betragen.

Wird das Gebäude bzw. der Nutzer/Verteiler tatsächlich angeschlossen, wird dann zwischen dem Gebäude (Nutzer/Verteiler) und dem Anschlussgehäuse ein weiteres Datenkabel verlegt, bevorzugt in einem Anschluss-Leerrohr (vgl. insofern die vorstehenden Anmerkungen). Dieses weitere Datenkabel wird dann mit dem Datenkabel (das von der Datenkabel-Verzweigungsstelle kommt) verbunden, was im Allgemeinen bspw. auch durch Spleißen erfolgen kann. Als Verbindungsort dient bevorzugt das Kabelgehäuse. "Verbinden" ist in diesem Zusammenhang auf das Herstellen einer funktionalen Verbindungsstelle zu lesen, über welche hinweg Daten übertragbar sind. Allgemein können die vorliegend in Rede stehenden Daten insbesondere Internetdaten sein, was auch Telekommunikationsdaten wie E-Mail etc. und Telefonie (VOIP) umfasst, ebenso auch Fernseh- bzw. allgemein Unterhaltungsdaten. Wie verschiedentlich erwähnt, ist das Datenkabel bevorzugt ein Glasfaserkabel, welches eine einzige oder bevorzugt mehrere Glasfasern aufweisen kann. Beim Verbinden wird im Falle mehrerer Glasfasern dann jeweils eine Glasfaser des einen Datenkabels mit einer Glasfaser des anderen Datenkabels verbunden.

Bei einer bevorzugten Ausführungsform ist zum Verbinden des Datenkabels, das von bzw. über die Datenkabel-Verzweigungsstelle kommt, und jenem für den Gebäudeanschluss ein Stecker vorgesehen, vorzugsweise am Kabelgehäuse. Das erstgenannte Datenkabel kann dann bspw. vom Netzbetreiber verlegt werden, bevorzugt zunächst ohne Stecker, was das Einschieben/Einblasen vereinfacht bzw. ermöglicht. Das Datenkabel wird dann also ohne Stecker am Ende durch das Leerrohr verlegt, bevorzugt über die Datenkabel-Verzweigungsstelle in Richtung des Anschlussgehäuses (insbesondere durch Einblasen von einem Knotenpunkt aus, siehe vorne). Anschließend wird das in das Anschlussgehäuse verlegte Ende für die Steckverbindung vorbereitet, wird also bspw. ein Stecker angespleißt (der dann an/in dem Kabelgehäuse angeordnet ist).

Das weitere Datenkabel, das zwischen Anschlussgehäuse und Nutzer/Verteiler bzw. Gebäude verlegt wird, ist bevorzugt an einem oder auch beiden Enden mit einem Stecker bzw. Aufsatz zum Ansetzen eines Steckers vorkonfektioniert. An einem vorkonfektionierten Ende lässt sich der Stecker dann ohne besonderes Spezialwerkzeug, insbesondere ohne Spleißgerät, zusammensetzen, exemplarisch wird auf die EP 2 482 109 A2 bzw. das Produkt DiaLink von Diamond verwiesen. Das vorkonfektionierte Ende lässt sich ohne das angesetzte Steckerteil gut durch das Anschluss-Leerrohr verlegen, danach wird das Steckerteil aufgesetzt und kann die Steckverbindung mit dem Datenkabel hergestellt werden (dies ist bspw. der Ablauf beim Einschieben des weiteren Datenkabels vom Gebäudeinneren her). Das weitere Datenkabel kann jedoch auch vom Anschlussgehäuse her eingeschoben werden, das Ende mit dem abnehm- und aufsetzbaren Steckerteil wird dann also ins Gebäudeinnere geschoben und dort zusammengesetzt. Das in dem Anschlussgehäuse angeordnete Ende kann in diesem Fall auch mit einem fertigen Stecker ausgestattet sein.

Generell wird das Leerrohr und/oder das Anschluss-Leerrohr zum Gehäuseinnenraum hin bevorzugt gedichtet. Ist durch das entsprechende Leerrohr ein Datenkabel verlegt, kann bspw. ein Dichtelement mit einer entsprechenden Durchlassöffnung vorgesehen sein (dieses dichtet gegen das Kabel und gegen das Leerrohr), bspw. als Teil eines Fittings. Ist noch kein Datenkabel verlegt, kann das Leerrohr z. B. mit einem Blindstopfen bzw. -verschluss verschlossen sein. Das Abdichten der Leerrohre kann bspw. einem Wassereintritt (zum Gebäude oder Knotenpunkt hin) vorbeugen oder auch eine Barriere für Schleichgas darstellen. Speziell in Verbindung mit der vorstehend geschilderten "Auszugsicherung" kann das Abdichten die Sicherheit erhöhen, weil damit einem Verrutschen bzw. -setzen des Leerrohres vorgebeugt wird, bei dem sich die Abdichtung des Leerrohres lösen könnte. Besonders bevorzugt kann eine Integration der Leerrohr-Abdichtung in die Anschlussstelle sein, wird dort also das Leerrohr angesetzt und gehalten, sowie zugleich gedichtet (nicht bzw. nicht nur an der Außenwandfläche, sondern auch der Innenraum) z. B. mit einem Fitting.

Bei einer bevorzugten Ausführungsform weist das Anschlussgehäuse eine Führungsvorrichtung auf, um ein von der Datenkabel-Verzweigungsstelle her eingeschobenes Datenkabel nach oben durch die Öffnung aus dem Anschlussgehäuse herauszuführen. Diese Führungsvorrichtung schließt an die Eintrittsstelle an, an welcher das Datenkabel in den Gehäuseinnenraum gelangt. Sie ist bevorzugt in ihrer Position am Anschlussgehäuse festgelegt, bspw. angeformt oder befestigt. Sie ist bevorzugt an der Anschlussstelle befestigt an welche gehäuseaußenseitig das Leerrohr gesetzt ist, vorzugsweise an dem Fitting. Die Führungsvorrichtung kann einen Kanal begrenzen, in dem das Ende des Datenkabels beim Einschieben in den Gehäuseinnenraum nach oben geführt wird. Dieser Kanal kann im Allgemeinen auch offen sein, bspw. eine U- bzw. V-Form haben, er kann jedoch auch von einem kurzen Rohrstück gebildet sein, bspw. einem Wellrohrstück. Als Führungsvorrichtung kann im Allgemeinen auch ein Leitblech oder dergleichen vorgesehen sein, funktional soll das Ende des Datenkabels entlang der Führungsvorrichtung nach oben gelenkt werden. Die Führungsvorrichtung kann damit einem Verfangen des Datenkabels im Gehäuseinneren bzw. Öffnungsrand etc. vorbeugen, also eine Beschädigung vermeiden helfen. Bevorzugt ist die Führungsvorrichtung im Gehäuseinnenraum auf das Fitting der Anschlussstelle aufgesteckt oder eingesteckt.

Wie bereits erwähnt, liegt die Datenkabel-Verzweigungsstelle bevorzugt an einem Leerrohrstrang, bildet sie nämlich einen Abzweig davon. Der Leerrohrstrang erstreckt sich entlang mehrerer Nutzer- bzw. Verteilerstellen. Im Falle der Antennenstationen bzw. -einheit passiert der Leerrohrstrang mehrere solche Einheiten bzw. Stationen. Im Falle der Gebäude erstreckt er sich entlang mehrerer Gebäudegrundflächen, die bereits bebaut sein können (Bestand) oder bebaut werden (Neubaugebiet). Der Leerrohrstrang wird typischerweise in einem Graben verlegt, der dann aufgefüllt wird; er kann sich insbesondere entlang einer Straße erstrecken, z. B. am Straßenrand (bspw. unter dem Gehweg). Der Strang kann z. B. in Form eines Bündels durchgehender Leerrohre vorgesehen sein, wobei zur Herstellung eines jeweiligen Abzweigs jeweils ein durchgehendes Leerrohr aufgetrennt und aus dem Strang abgezweigt wird. Das mit dem Auftrennen geschaffene Ende wird dann bevorzugt an bzw. in das Anschlussgehäuse geführt. Der andere mit dem Auftrennen gebildete Rohrabschnitt kann z. B. ungenutzt in dem Bündel verbleiben.

Unabhängig von diesen Details ist im Falle des Leerrohrstranges eine "Verzweigungsstelle" dann z. B. jener Punkt, von dem weg sich das Leerrohr nicht mehr parallel zum Strang erstreckt, sondern in einer Krümmung zum Anschlussgehäuse hin verläuft. Ein Abstand zwischen Datenkabel-Verzweigungsstelle und Anschlussgehäuse kann bspw. höchstens 15 m, 10 m, 5 m bzw. 3 m betragen, mögliche Untergrenzen können (davon unabhängig) bei z. B. mindestens 0,5 m bzw. 1 m liegen.

Im Bestand kann bei der Erschließung dann bei einem oder auch mehreren der Gebäude direkt ein Leerrohr von der jeweiligen Datenkabel-Verzweigungsstelle zum Nutzer/Verteiler verlegt werden, also ohne Anschlussgehäuse dazwischen. So kann für jene Haushalte bzw. Eigentümer vorgegangen werden, die sich bereits bei der Erschließung für einen entsprechenden Datenanschluss entscheiden. Bei jenen Gebäuden, für die (vorerst) kein Datenanschluss gewünscht ist, wird jeweils ein Anschlussgehäuse platziert (und über ein Leerrohr von der Datenkabel-Verzweigungsstelle angeschlossen). Prinzipiell könnten dabei mehrere Gebäude auch über ein gemeinsames Anschlussgehäuse zusammengefasst werden (z. B. zwei Gebäude), oder es wird jedem Gebäude ein eigenes Anschlussgehäuse zugeordnet. Bezüglich der Möglichkeiten zur Platzierung des Anschlussgehäuses (direkt an der Gebäudegrundfläche oder an der Grundstücksgrenze etc.) wird auf die vorstehenden Ausführungen verwiesen, gleiches gilt für die Möglichkeiten der Vorbereitung der Nachbelegung (Endabschnitt in Schleifenform im Gehäuseinneren vorgehalten, Stecker oder auch vorerst nur Leerrohranbindung).

Gemäß einer bevorzugten Ausführungsform liegt die Verzweigungsstelle also an einem Leerrohrstrang, der sich entlang mehrerer Datennutzer- oder Datenverteilerstellen erstreckt, wobei zu einem Teil der Datennutzer- oder Datenverteilerstellen ein jeweiliges Leerrohr direkt zwischen einer jeweiligen Datenkabel-Verzweigungsstelle an dem Leerrohrstrang und der Datennutzer- oder Verteilerstelle verlegt wird, und wobei bei einem anderen Teil der Datennutzer- oder Datenverteilerstellen ein jeweiliges Anschlussgehäuse platziert wird und zwischen einer jeweiligen Datenkabel-Verzweigungsstelle an dem Leerrohrstrang und dem jeweiligen Anschlussgehäuse ein jeweiliges Leerrohr für ein jeweiliges Datenkabel verlegt wird.

Im Neubaugebiet werden bevorzugt sämtliche Anschlüsse über ein Anschlussgehäuse geführt, es kann bspw. für jedes Gebäude ein eigenes Anschlussgehäuse vorgesehen werden oder es können auch mehrere Gebäude demselben Außengehäuse zugeordnet werden (bevorzugt zwei Gebäude je Anschlussgehäuse). Mit Blick auf die noch folgenden Bauarbeiten wird dieses dann bevorzugt an der Grundstücksgrenze platziert (auf der Straße oder auf dem Grundstück). Vorteilhaft kann z. B. ein Positionieren des Anschlussgehäuses am Randstein sein, weil dieser auch in einem sehr frühen Ausbaustadium bereits einen Bezugspunkt definieren kann. Das "am Randstein" positionierte Anschlussgehäuse kann z. B. auf denselben Unterbau bzw. dieselbe Tragschicht wie der Randstein gesetzt werden, also bspw. auf dieselbe verdichtete Schotterschicht. Bevorzugt wird eine den Randstein einfassende Betonfüllung genutzt, um das Anschlussgehäuse horizontal und/oder vertikal einzubetten oder ein Fundament zu schaffen, auf welches das Anschlussgehäuse aufgesetzt wird. Den Rand- bzw. Bordstein kann diese Betonfüllung nach vertikal unten und/oder horizontal einfassen, z. B. als Fundament und Rückenstütze. Eine Positionierung an der Grundstücksgrenze, insbesondere am Randstein, kann nicht nur im Neubau, sondern auch im Bestand von Interesse sein.

Bei der Erschließung im Neubau kommen prinzipiell sämtliche vorstehend diskutierten Verlegetechniken (zwischen Anschlussgehäuse und dem dann errichteten Gebäude) in Betracht; im Anschlussgehäuse kann dann der Endabschnitt schleifenförmig abgelegt werden oder die Anbindung über eine Verbindungsstelle erfolgen, bspw. über einen Stecker vorbereitet werden. Von dem Knotenpunkt aus können die einzelnen Datenkabel jedenfalls in einem Arbeitsvorgang zu den unterschiedlichen Anschlussgehäusen verlegt werden. Bei einer Positionierung an der Grundstücksgrenze oder auch auf dem Grundstück muss dann bei einer nachträglichen Belegung der Gehweg/die Straße nicht nochmals aufgegraben werden.

Gemäß einer bevorzugten Ausführungsform "Neubau" liegt die Datenkabel-Verzweigungsstelle an einem Leerrohrstrang, der sich entlang mehrerer Datennutzer- oder Datenverteilerstellen erstreckt, nämlich entlang mehrerer Gebäude bzw. Gebäudegrundflächen, wobei jeder Gebäudegrundfläche ein Anschlussgehäuse zugeordnet wird, nämlich außerhalb der jeweiligen Gebäudegrundfläche platziert wird, und wobei für jedes Anschlussgehäuse zwischen einer jeweiligen Datenkabel-Verzweigungsstelle an dem Leerrohrstrang und dem jeweiligen Anschlussgehäuse ein jeweiliges Leerrohr für ein jeweiliges Datenkabel verlegt wird.

Offenbart sein soll auch ein Verfahren bzw. eine Verwendung zum Bereitstellen einer Datenkabelanbindung für ein Gebäude (vgl. die vorst. Definitionen), und zwar einer Anbindung an eine Datenkabel-Verzweigungsstelle (vgl. die vorst. Definitionen), wobei ein Anschlussgehäuse vorgesehen wird, das einen Gehäuseinnenraum aufweist, der von außen über eine Öffnung in dem Anschlussgehäuse zugänglich ist, wobei das Anschlussgehäuse zwischen der Datenkabel-Verzweigungsstelle und dem Gebäude positioniert wird, und zwar außerhalb einer Gebäudegrundfläche (vgl. die vorst. Definitionen), dabei aber nahe an der Gebäudegrundfläche, bspw. in einem Abstand von höchstens 1 m, bevorzugt direkt daran grenzend, wobei das Anschlussgehäuse auf einer vertikalen Höhe platziert wird, die innerhalb der fertigen Bodenaufbauhöhe liegt, wobei aber die Öffnung von oben zugänglich bleibt. Bevorzugt wird das Anschlussgehäuse so platziert, dass es an eine Außenwandfläche einer Kelleraußenwand des Gebäudes grenzt.

Das Anschlussgehäuse wird in diesem Fall nicht zwingend im Bereich der Straße, also im Schichtaufbau der Straße angeordnet. Eine Positionierung im Schichtaufbau der Straße ist zwar möglich (z. B. in der Stadt, Gebäudeaußenwand/Fassade direkt am Gehweg), aber nicht zwingend. Das Anschlussgehäuse kann bspw. auch auf einem Grundstück im Boden, also im Erdreich verlegt werden. Dabei könnte sich zwar prinzipiell die vorstehend geschilderte Setzungsproblematik ergeben, die Positionierung an der Gebäudegrundfläche schafft jedoch eine Stabilisierung, die Kelleraußenwand kann also abstützend wirken (dort stützt sich einerseits das Anschlussgehäuse selbst ab, andererseits ist auch das Erdreich etwas stabilisiert (zur Seite hin).

Die Positionierung an der Gebäudegrundfläche kann bspw. auch insoweit von Vorteil sein, als die Verbindung zwischen Anschlussgehäuse und Gebäude dann auch ganz ohne Aufgraben hergestellt werden kann. Durch die Gebäudeaußenwand kann gebohrt werden, durch diese Bohrung lässt sich das Datenkabel bzw. weitere Datenkabel (siehe vorne) dann ins Gebäude verlegen. Die Bohrung kann bspw. oberirdisch in die Gebäudeaußenwand eingebracht werden, etwa im Falle eines kellerlosen Gebäudes, oder im Falle eines unterkellerten Gebäudes auch unterirdisch, also in die Kelleraußenwand. Zu einer oberirdischen Bohrung kann das (weitere) Datenkabel bspw. in einem Kabelschacht entlang der Außenwandfläche geführt werden, die unterirdische Bohrung kann sich bevorzugt direkt in das Anschlussgehäuse erstrecken.

Das Anschlussgehäuse kann insgesamt bspw. eine vertikale Höhe von mindestens 40 cm bzw. 50 cm haben, mit möglichen (davon unabhängigen) Obergrenzen bei z. B. höchstens 80 cm bzw. 70 cm. Der von der Seitenwand des Anschlussgehäuses begrenzte Gehäuseinnenraum des Anschlussgehäuses kann bspw. ein Innenvolumen von mindestens 20 l, 30 l, 40 l bzw. 50 l haben, mit möglichen (davon unabhängigen) Obergrenzen bei bspw. höchstens 100 l, 90 l, 80 l, 70 l bzw. 60 l. Die den Gehäuseinnenraum seitlich begrenzende Seitenwand kann bezogen auf die vertikale Richtung zusammengesetzt sein, das Anschlussgehäuse kann also aus einem Unter- und einem aufgesetzten Oberteil aufgebaut sein. An ersterem kann dann bspw. eine oder können mehrere Anschlussstellen für das bzw. die Leerrohre vorgesehen sein, die bspw. von Steckfittingen gebildet werden können. Auf ein solches Unter- ist dann ein Oberteil gesetzt, bspw. eine Straßenkappe. Das Anschlussgehäuse kann aber andererseits über seine vertikale Erstreckung auch durchgehend aus demselben Material, also monolithisch geformt sein. Es kann insbesondere ein durchgehendes Spritzgussteil sein. An die Seitenwand des Anschlussgehäuses konkret deren Außenwandfläche, legt sich im Zuge des Einbaus des Anschlussgehäuses in den Boden z. B. das Bodenmaterial an, etwa Schüttgut wie Kies etc.

Die Erfindung betrifft auch eine Kabelanbindungseinheit, die sich als Gegenstand einer vorliegend offenbarten Verwendung ergibt, wenn also das Anschlussgehäuse in den Boden eingebaut und das Leerrohr angeschlossen wird etc.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: eine Anschlussgehäusevorrichtung mit einem Anschlussgehäuse, das aus einem Ober- und einem Unterteil zusammengesetzt ist, in schematischer Darstellung;
- Figur 2: verschiedene Möglichkeiten zur Positionierung von Anschlussgehäusen bei einer Erschließung von Gebäuden im Bestand;
- Figur 3a,b: eine erste Möglichkeit zur Weiterverlegung zwischen Anschlussgehäuse und Gebäude bzw. Verteiler/Nutzer;
- Figur 4: analog Figur 2 eine Möglichkeit zur Positionierung von Anschlussgegehäusen im Falle eines Neubaugebiets;
- Figur 5: eine zweite Möglichkeit zur Weiterverlegung zwischen Anschlussgehäuse und Gebäude bzw. Verteiler/Nutzer;
- Figur 6: eine WLAN-Einheit für öffentliches WLAN als Nutzer/Verteiler;
- Figur 7: das Unterteil der Vorrichtung gemäß Figur 1 mit einem eingesetzten Fitting als Anschlussstelle in einer Schrägansicht von oben;
- Figur 8: das von einem Adapter gehaltene Fitting gemäß Figur 7 in einer geschnittenen Seitenansicht;
- Figur 9: den Adapter gemäß Figur 8 in einer Einzeldarstellung;
- Figur 10: den Adapter gemäß Figur 9 in einem Schnitt;
- Figur 11: in schematischer Darstellung eine Anschlussgehäusevorrichtung mit einem Anschlussgehäuse, dessen Gehäuseinnenraum ein Kabelgehäuse in einem Dichtbehälter angeordnet ist;
- Figur 12: ein an einer Seitenwand eines Anschlussgehäuses befestigtes Fitting in einem Schnitt, und zwar alternativ zu Figur 8 ohne Adapter;
- Figur 13: das Fitting gemäß Figur 12 mit einem gehäuseinnenseitig zur Verlängerung angesetzten Wellrohr.

### Bevorzugte Ausführung der Erfindung

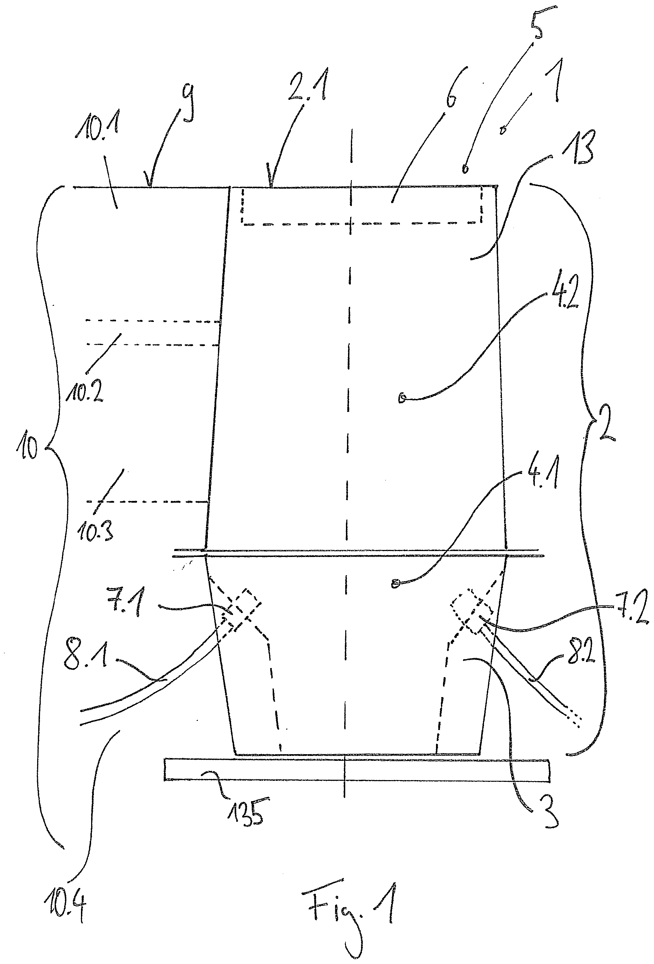

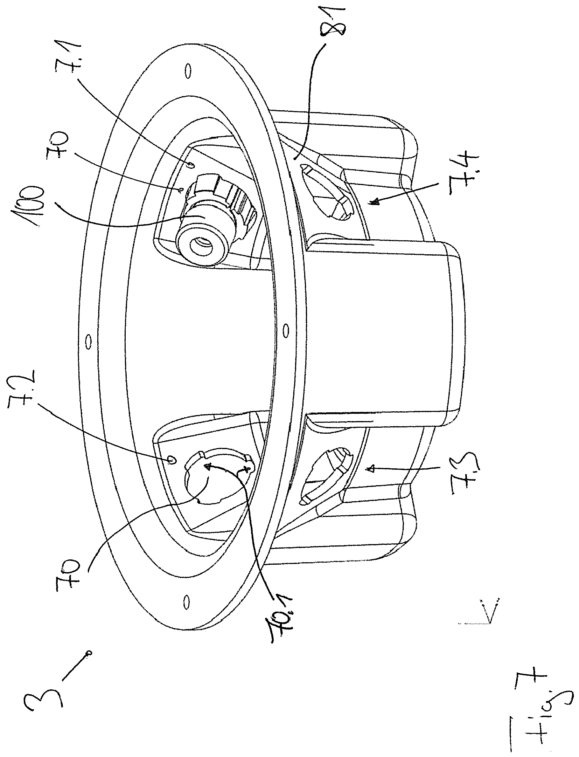

Figur 1 zeigt eine Anschlussgehäusevorrichtung 1 mit einem Anschlussgehäuse 2, das aus einem Unterteil 3 und einem Oberteil 13 zusammengesetzt ist. Bei dem Oberteil 13 handelt es sich um eine Straßenkappe, das Unterteil 3 wird im Detail anhand der Figuren 7-13 diskutiert. Das Anschlussgehäuse 2 begrenzt einen Gehäuseinnenraum 4, welcher sich der Gliederung in Unter- und Oberteil 3, 13 entsprechend in einen unteren Abschnitt 4.1 und einen oberen Abschnitt 4.2 gliedert. Oberseitig weist das Anschlussgehäuse 2 eine Öffnung 5 auf, über welche der Gehäuseinnenraum 4 zugänglich ist, und die vorliegend mit einem Deckel 6 verschlossen ist.

Das Anschlussgehäuse 2 ist mit Anschlussstellen 7.1, 7.2 ausgestattet. An die Anschlussstelle 7.1 ist ein Leerrohr 8.1 angesetzt, das sich von einem Leerrohrstrang zu dem Anschlussgehäuse 2 erstreckt. An die Anschlussstelle 7.2 wird, je nach Anwendung und Vorgehen im Einzelnen, ein Anschluss-Leerrohr 8.1 angesetzt, welches dann das Anschlussgehäuse 2 mit dem Verteiler/Nutzer, bspw. einem Gebäude verbindet.

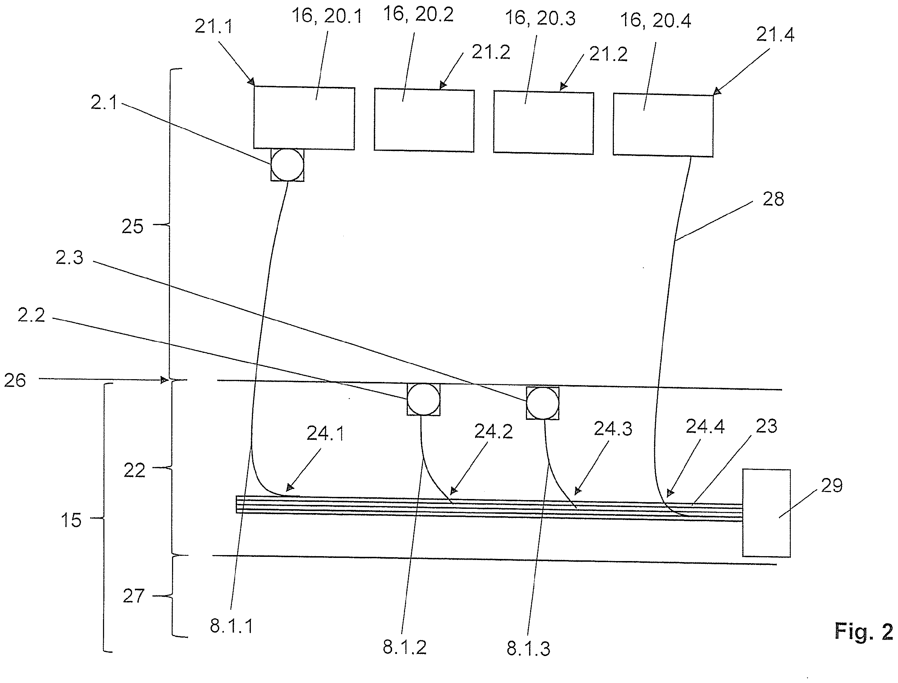

Das Anschlussgehäuse 2 wird außerhalb des Gebäudes im Schichtaufbau 10 der Straße 15 platziert (siehe auch Figur 2), sodass eine Oberkante 2.1 des Anschlussgehäuses 2 bündig mit einer Oberkante 9 des Schichtaufbaus 10 liegt, der in der linken Bildhälfte skizziert ist. Eine obere Schicht 10.1 kann bspw. die Pflasterschicht (Gehweg) oder Asphaltdeckschicht (Straße) sein, die Schicht 10.2 darunter kann entsprechend ein Bett oder eine Binderschicht sein. Die darunterliegenden Schichten 10.3, 10.4 stellen Tragschichten dar. Wird das Anschlussgehäuse 2 positioniert, ist die Lage der Oberkante 9 bereits bekannt (festgelegt), auch wenn der Schichtaufbau 10 mitunter erst deutlich später erstellt wird.

Figur 2 illustriert verschiedene Möglichkeiten bei einer Anwendung im Bestand. In der hier dargestellten Situation wird ein Straßenzug durch Glasfaserverlegung erschlossen. Schematisch sind als Datennutzerstellen 16 vier Gebäude 20.1-20.4 dargestellt, die jeweils auf einer Gebäudegrundfläche 21.1-21.4 stehen. Für die Erschließung wird der Gehweg 22 aufgebrochen und wird ein Graben ausgehoben, dieser ist in der schematischen Aufsicht nicht im Einzelnen dargestellt. In dem Graben wird ein Leerrohrstrang 23 verlegt, für jedes Gebäude 20.1-20.4 gibt es eine jeweilige Datenkabel-Verzweigungsstelle 24.1-24.4. Zur Illustration und Orientierung: in der Darstellung oberhalb des Gehwegs 22 erstrecken sich die jeweiligen Grundstücke 25, dazwischen liegt jeweils die Grundstücksgrenze 26. In der Darstellung unterhalb des Gehwegs 22 verläuft die Fahrbahn 27, die wie der Gehweg 22 Teil der Straße 15 ist.

Im Zuge der Erschließung dieses Straßenzugs hat sich hier exemplarisch nur ein Eigentümer für einen sofortigen Anschluss entschlossen, dies ist das Gebäude 20.4. In diesem Fall kann von der Datenkabel-Verzweigungsstelle 24.4 zu dem Gebäude 20.4 direkt ein Leerrohr 28 verlegt werden. Durch dieses wird dann das Datenkabel verlegt.

Für die Gebäude 20.1-20.3, für die (vorerst) kein Anschluss gewünscht ist, wird jeweils ein Anschlussgehäuse 2.1-2.3 platziert. Ferner wird, weil ja der Graben momentan ausgehoben ist, ein jeweiliges Leerrohr 8.1.1-8.1.3 zwischen der jeweiligen Datenkabel-Verzweigungsstelle 24.1-24.3 und dem jeweiligen Anschlussgehäuse 2.1-2.3 verlegt, vgl. auch die Zusammenschau mit Figur 1 zur Illustration. Der Graben kann dann aufgeschüttet, und es kann der Schichtaufbau 10 wiederhergestellt werden.

Soll dann später zu einem der Gebäude 20.1-20.3 doch ein Datenkabel verlegt werden, muss jedenfalls der Gehweg 22 nicht mehr aufgegraben werden. Durch das entsprechende Leerrohr 8.1.1-8.1.3 kann über die jeweilige Datenkabel-Verzweigungsstelle 24.1-24.3 von einem Knotenpunkt 29 aus ein Datenkabel eingeblasen werden, es kann der Deckel 6 des Anschlussgehäuses 2 geöffnet und das Datenkabel dort entgegengenommen werden. Bei dem Gebäude 20.1 sitzt das Anschlussgehäuse 2.1 direkt an der Gebäudegrundfläche 21.1, und zwar nicht hauptanspruchsgemäß nicht im Bereich der Straße, sondern auf dem Grundstück 25. Bei der Platzierung direkt am Gebäude muss gar nicht mehr aufgegraben, sondern nur durch die Gebäudeaußenwand gebohrt werden. Bei den Gebäuden 20.2, 20.3 muss zur Erdverlegung zwar ein Stück auf dem Grundstück 25 ausgehoben werden, der Aufwand hierfür ist jedoch deutlich geringer als für das Aufgraben des Gehwegs 22.

Aufgrund ihrer Positionierung im Schichtaufbau 10 der Straße 15 sind die Anschlussgehäuse 2.2, 2.3 stabil gehalten, sie können nicht absacken bzw. verkippen. Damit kann einem Herausrutschen der Leerrohre 8.1,8.2 und damit einem Abknicken des Datenkabels vorgebeugt werden. Ein einfach in die Erde gesetztes, also nicht in Tragschichten 10.3, 10.4 eingefasstes Anschlussgehäuse 2 wäre hingegen instabil, speziell Glasfaserkabel wären bruchgefährdet. Das Anschlussgehäuse 2.1 ist zwar nicht im Schichtaufbau 10 der Straße 15 vorgesehen, jedoch aufgrund der Positionierung direkt am Gebäude 20.1 stabilisiert.

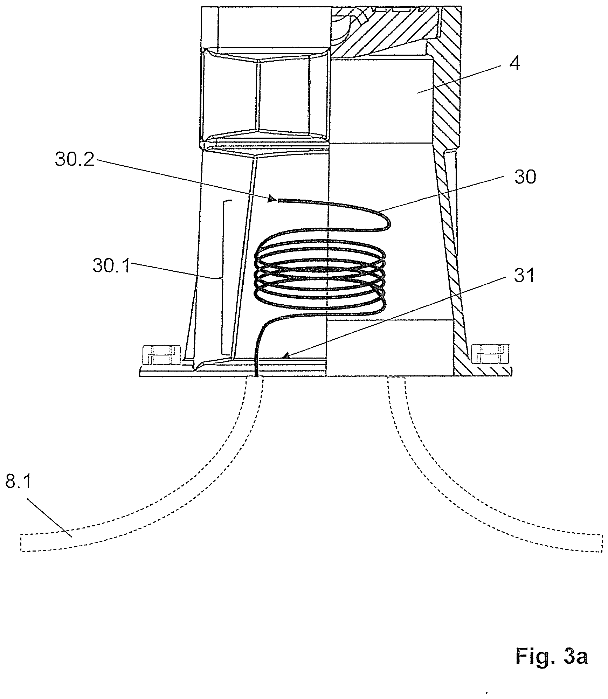

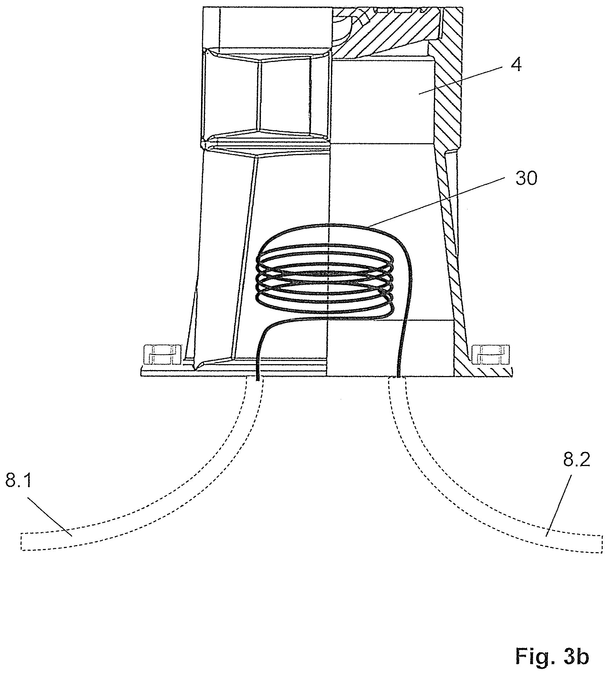

Die Figuren 3a, b illustrieren, wie ein Datenkabel 30 durch das Leerrohr 8.1 in das Gehäuseinnere 4 verlegt wird, wobei der Übersichtlichkeit halber nur das Oberteil 13 (die Straßenkappe) ohne das Unterteil 3 dargestellt ist. Das Verlegen des Datenkabels 30 erfolgt in diesem Fall mit einer Überlänge, ein Endabschnitt 30.1 des Datenkabels 30 hat von einer Eintrittsstelle 31 in das Gehäuseinnere 4 weg genommen eine Länge von rund 10 m.

Figur 3b illustriert, wie dieser Endabschnitt 30.1 dann durch das vorab oder nachträglich angesetzte Anschluss-Leerrohr 8.2 weiter zur Datennutzer- bzw. - verteilerstelle 16 verlegt, also im Falle von Fig. 2 zum Gebäude. Konkret wird das Ende 30.2 des Datenkabels 30 in das Leerrohr 8.2 eingeschoben, im fertig installierten Zustand liegt es dann innerhalb des Gebäudes.

Der Zustand gemäß Figur 3a (Vorverlegung bis in das Anschlussgehäuse 2) kann in der Situation gemäß Figur 2 für die Anschlussgehäuse 2.1-2.3 im selben Arbeitsvorgang hergestellt werden, in dem auch der Anschluss durch das Leerrohr 28 gelegt wird. Es wäre dann also in jedes der Anschlussgehäuse 2.1-2.3 ein Datenkabel 30 vorverlegt, wobei der entsprechende Endabschnitt 30.1 bevorzugt in Schleifenform (Bruchgefahr) abgelegt wird. Das Unterteil 3 kann hierfür bspw. zusätzlichen Raum schaffen bzw. auch eine Unterteilung in mehrere Bereiche ermöglichen, vgl. die Beschreibungseinleitung. Zusammengefasst gibt es also einerseits die Möglichkeit, dass die Anschlussgehäuse 2.1-2.3 bei der Vorverlegung bereits tatsächlich mit Datenkabeln 30 bestückt werden. Andererseits ist jedoch auch allein die Positionierung und Anbindung über die Leerrohre 8.1.1-8.1.3 dahingehend ausreichend, dass der Gehweg nicht mehr aufgegraben werden muss.

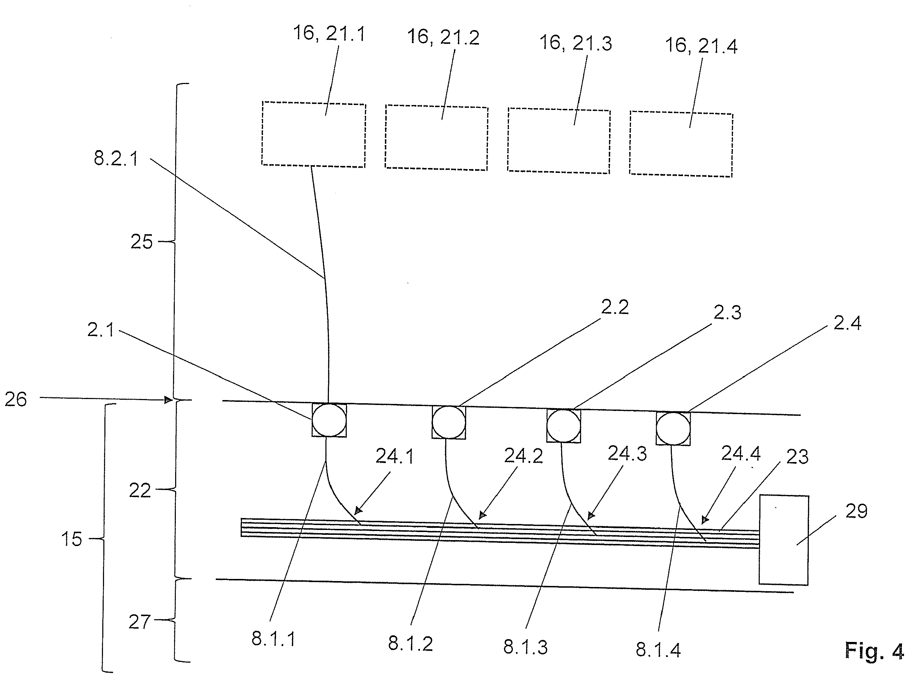

Figur 4 illustriert eine Anwendung in einem Neubaugebiet. Zur Orientierung sind wiederum der Gehweg 22 und die Fahrbahn 27 der Straße 15 eingezeichnet, wobei diese bei der Verlegung des Leerrohrstranges 23 noch gar nicht hergestellt sind. In diesem Fall sind auch noch keine Gebäude erstellt (jedenfalls noch nicht vollständig), weswegen nur die Gebäudegrundflächen 21.1-21.4 eingezeichnet sind.

Bei der Verlegung des Leerrohrstranges 23 wird an jeder Datenkabel-Verzweigungsstelle 24.1-24.4 ein jeweiliges Leerrohr 8.1.1-8.1.4 zu einem jeweiligen Anschlussgehäuse 2.1-2.4 verlegt. Die Anschlussgehäuse 2.1-2.4 werden in diesem Fall an den Grundstücksgrenzen 26, aber noch auf dem Gehweg 22 platziert. Dadurch werden die späteren Bauarbeiten auf den Grundstücken 25 nicht behindert.

Wird dann das erste Gebäude fertiggestellt, bspw. auf der Gebäudegrundfläche 21.1, wird zwischen dem Anschlussgehäuse 2.1 und diesem Gebäude ein Anschluss-Leerrohr 8.2.1 verlegt. Von dem Knotenpunkt 29 her wird dann das Datenkabel über die Datenkabel-Verzweigungsstelle 24.1 und das Anschlussgehäuse 2.1 bis in das Gebäude verlegt. In diesem Zuge werden dann auch zu den anderen Anschlussgehäusen 2.2-2.4 bereits die Datenkabel verlegt, sie können dort analog Figur 3a abgelegt werden. Es muss dann vorteilhafterweise nur einmal an dem Knotenpunkt 29 hantiert werden.

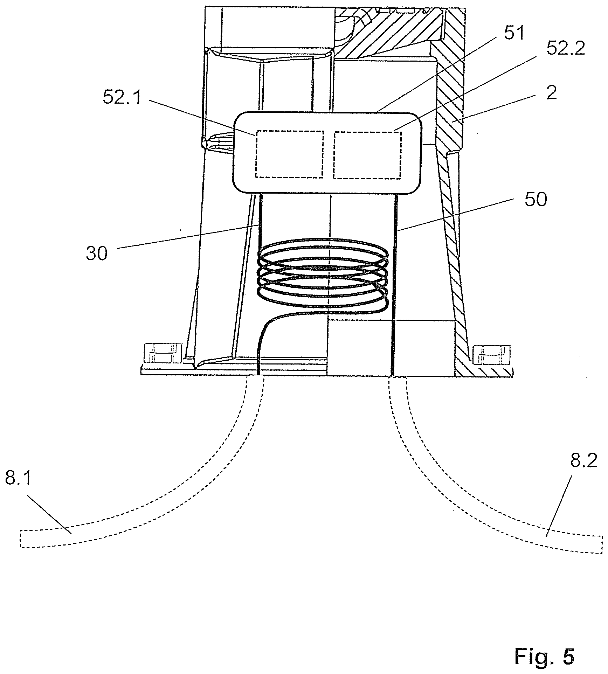

Figur 5 illustriert eine Alternative zu dem Vorgehen gemäß den Figuren 3a,b, nämlich die Herstellung der Nutzer/Verteiler-, insbesondere Gebäudeanbindung über ein weiteres Datenkabel 50. Dieses wird in dem Anschlussgehäuse 2 mit dem Datenkabel 30 verbunden, vorliegend durch Zusammenstecken in einem Steckergehäuse 51. Dieses weist einen abgedichteten Innenraum auf, in diesem werden die Datenkabel 30, 50 zusammengesteckt. Jedes der Datenkabel 30, 50 tritt gedichtet in das Steckergehäuse 51 ein. Das Steckergehäuse kann prinzipiell eine Zugangsöffnung haben, bevorzugt kann eine Variante mit zwei separaten Zugangsöffnungen 52.1, 52.2 sein. Jede Öffnung 52.1, 52.2 ist mit einem eigenen Verschluss versehen, die Öffnung 52.1 wird zum Einbringen des Datenkabels 30 geöffnet, die Öffnung 52.2 zum Einbringen des Datenkabels 50.

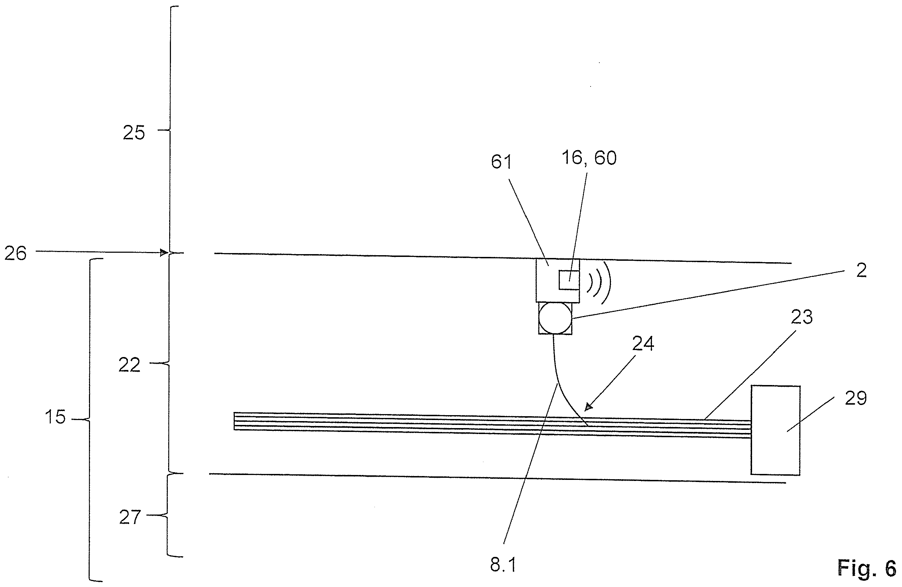

Figur 6 zeigt eine weitere Anwendungsmöglichkeit, wobei das Anschlussgehäuse 2 wiederum zwischen einer Datenkabel-Verzweigungsstelle 24 und einer Datennutzer- oder -verteilerstelle 16 platziert wird. Konkret handelt es sich bei letzterer um eine Funkeinheit 60, nämlich ein WLAN-Modul. Dieses ist bzw. wird zur Bereitstellung eines öffentlichen WLAN-Netzes in einem hier schematisch gezeigten Laternenpfosten 61 angeordnet. Bei der Erschließung des Straßenzugs, also wenn der Gehweg 22 aufgegraben ist und der Leerrohrstrang 23 verlegt wird, wird das Anschlussgehäuse 2 neben dem Laternenpfosten 61 platziert und über das Leerrohr 8.1 mit der Datenkabel-Verzweigungsstelle 24 verbunden.

Bei den übrigen, entlang der Straße 15 angeordneten (nicht dargestellten) Laternenpfosten wird in analoger Weise verfahren, wird also jeweils ein Anschlussgehäuse 2 platziert (nicht zwingend an jedem Laternenpfosten, es kann bspw. auch jeder zweite für eine hinreichende Netzabdeckung ausreichend sein). Werden dann später die Datenkabel von dem Knotenpunkt 29 her eingeblasen, können die Datenkabel analog der vorstehenden Schilderung (siehe "Neubau") in einem Arbeitsgang in jedes Anschlussgehäuse 2 verlegt werden, die Anbindung des jeweiligen Funkmoduls 60 kann dann nach und nach erfolgen. Die Anschlussgehäuse 2 lassen sich auch bei Laternenpfosten 61 platzieren, wenn diese vorerst noch gar nicht mit einem Funkmodul 60 ausgestattet sind bzw. werden sollen. Das Anschlussgehäuse 2 kann eine spätere Nachrüstung deutlich vereinfachen (kein Aufgraben des Gehwegs 22).

Bei der Variante gemäß Figur 6 kann in dem Anschlussgehäuse 2 analog Figur 5 verfahren werden (Steckverbindung), bevorzugt ist die Variante gemäß den Figuren 3a, b (Hindurchschleifen einer Überlänge). Das Anschlussgehäuse 2 kann hierfür bspw. geöffnet werden, und es kann dann eine Verbindung durch eine Gehäusewand des Anschlussgehäuses 2 und eine Sockelwand des Laternenpfostens 61 gebohrt werden. Selbstverständlich kann die Variante gemäß Figur 6 bspw. auch mit jener gemäß Figur 2 kombiniert werden, können bei der Erschließung der Straße 15 also sowohl an den vorerst nicht angeschlossenen Gebäuden 20.1-20.3 als auch an Laternenpfosten 61 (oder auch Ampeln etc.) Anschlussgehäuse 2 platziert werden.

Figur 7 zeigt das Unterteil 3 ohne aufgesetzte Straßenkappe, es sind insgesamt vier Anschlussstellen 7.1-7.4 zu erkennen. Hierbei handelt es sich zunächst um Löcher 70 in der Seitenwand 81 des Unterteils 3. Die Löcher 70 können ursprünglich jeweils mit einem Blindverschluss (nicht dargestellt) verschlossen sein, der jeweils über eine Sollbruchstelle mit der Seitenwand 81 verbunden ist. In der Situation gemäß Figur 7 sind die Löcher 70 bereits geöffnet.

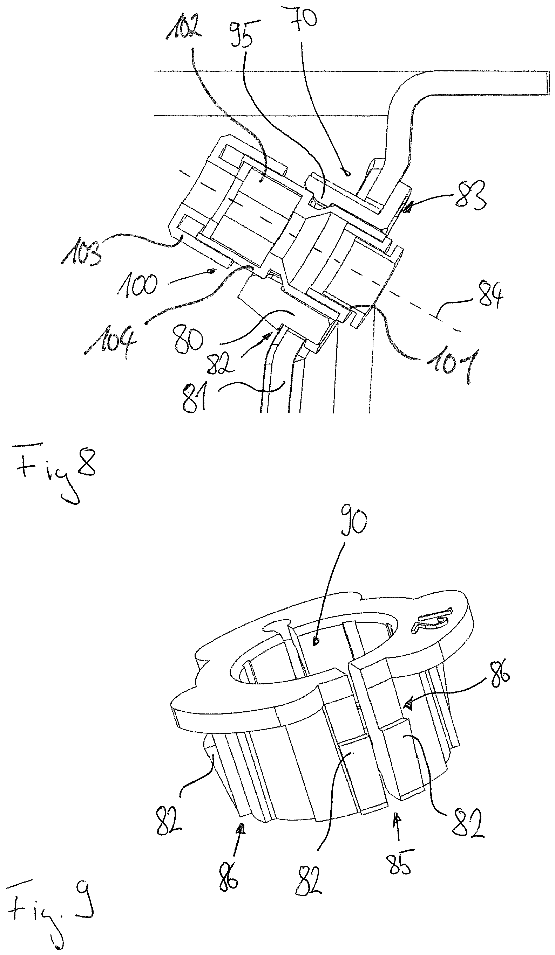

Die Anschlussstelle 7.1 ist bereits weiter vorbereitet, in das Loch 70 ist nämlich ein Fitting 100 eingesetzt. An dieses Fitting 100 kann, wie in Figur 1 schematisch dargestellt, von außen ein Leerrohr 8.1, 8.2 angesetzt, also vorliegend eingeschoben werden. Vom Gehäuseinnenraum 4 her wird zur Verlängerung bevorzugt ein Wellrohr eingeschoben (nicht dargestellt), siehe unten im Detail. Wie aus Figur 7 und insbesondere dem Schnitt gemäß Figur 8 ersichtlich, ist das Fitting 100 über einen Adapter 80 in dem Loch 70 in der Gehäusewand 81 montiert. Der Adapter 80 bildet Rastnasen 82, die der Adapter 80 gemeinsam mit einem Flansch 83 bezogen auf eine Längsachse 84 axial formschlüssig in dem Loch 70 halten.

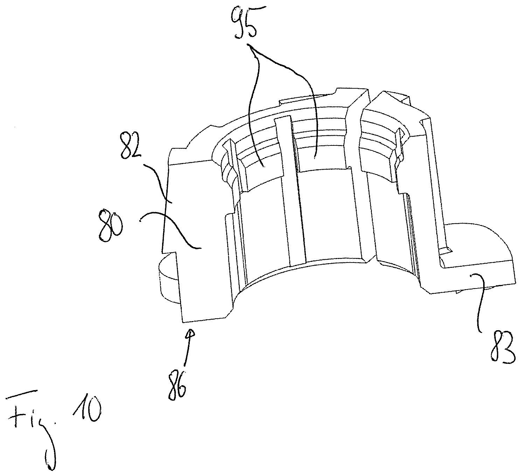

Im Folgenden wird ergänzend auch auf die Figuren 9 und 10 verwiesen. Der Adapter 100 bildet eine Durchgangsöffnung 90, in welcher das Fitting 100 angeordnet wird. In der Durchgangsöffnung 90 sind Formschlusselemente 95 des Adapters 100 angeordnet, die das eingesetzte Fitting 100 axial in Position halten. Dies ist aus der Zusammenschau mit Figur 8 ersichtlich, die Formschlusselemente 95 bilden mit dem Gehäuse 104 des Fittings 100 einen axialen Hinterschnitt.

Der Adapter 80 ist vorliegend als Einkomponenten-Spritzgussteil hergestellt, in dieser Form umschließt er die Durchgangsöffnung 90 weitgehend, aber nicht vollständig. Aus Figur 9 ist ersichtlich, dass eine Trennfuge 85 verbleibt, die ein gewisses Aufdehnen bzw. -weiten des Adapters beim Einsetzen des Fittings 100 ermöglicht. Bei der Montage wird zunächst das Fitting 100 in den Adapter 80 eingesetzt, anschließend wird dieser in das Loch 70 eingeschoben. Das Loch 70 bzw. die Seitenwand 81 schafft dann auch eine Sicherung, verhindert nämlich ein erneutes Aufdehnen des Adapters 80 und folglich axiales Herausrutschen des Fittings 100.

Wie aus den Figuren 9 und 10 ersichtlich, sind die Rastnasen 82 jeweils im Bereich eines Stegs 86 angeordnet, also in einem radial aufgedickten Bereich, der sich axial entlang des Adapters 80 erstreckt. Diese Aufdickung im Bereich der Rastnasen 82 schafft Stabilität, beugt also einem unbeabsichtigten Ausziehen vor. Wie aus Figur 7 ersichtlich, ist das Loch 70 mit Ausbuchtungen 70.1 vorgesehen. In diesen ist jeweils einer der Stege 86 angeordnet, was zugleich eine Verdrehsicherung schafft.

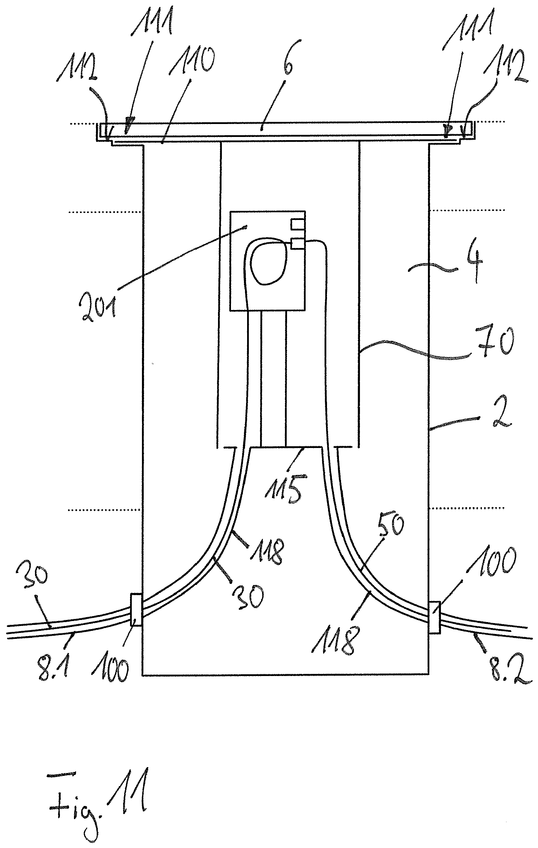

Figur 11 zeigt eine Anschlussgehäusevorrichtung 1, bei welcher das Anschlussgehäuse 2 im Wesentlichen analog Figur 1 aufgebaut und mit Fittingen 100 ausgestattet ist. Generell bezeichnen im Rahmen dieser Offenbarung dieselben Bezugszeichen Teile mit derselben oder vergleichbarer Funktion und wird insofern immer auch auf die Beschreibung zu den anderen Figuren verwiesen. In dem Anschlussgehäuse 2 ist ein Dichtbehälter 70 montiert; Dichtbehälter 70 weist Vorsprünge 110 auf, an diesen ist er aufgehängt. Die Vorsprünge 110 sind am oberen Ende des Dichtbehälters 70 angeordnet (im ortsfesten Koordinatensystem betrachtet); sie sitzen dann in Vertiefungen 111, sodass sie bündig in eine Anlagefläche 112 eingebettet sind. Auf dieser Anlagefläche 112 liegt der Deckel 6 des Anschlussgehäuses 2 auf, der somit zugleich die Vorsprünge 110 in den Vertiefungen 111 lagefixiert.

Der topfförmige Dichtbehälter 70 ist nach unten offen. In dieses offene Ende ist ein Ansetzteil 115 eingesetzt, das mit dem Dichtbehälter 70 verrastet ist. Dieses Ansetzteil 115 trägt ein Adapterteil 216, an dem das Kabelgehäuse 201 montiert ist. Im Gehäuseinnenraum 4 sind die Datenkabel 30, 50 in Leerrohren 118 geführt, die bevorzugt als Well- und/oder Spiralrohr ausgeführt sind (nicht dargestellt). Diese Leerrohre 118 sind mit einer Überlänge vorgesehen (nicht dargestellt), werden also bei eingesetztem Dichtbehälter 70 schleifenförmig in dem Gehäuseinnenraum 4 abgelegt und ermöglichen ein Herausnehmen des Dichtbehälters 70 mit daran befestigtem Ansetzteil 115 und Leerrohren 118.

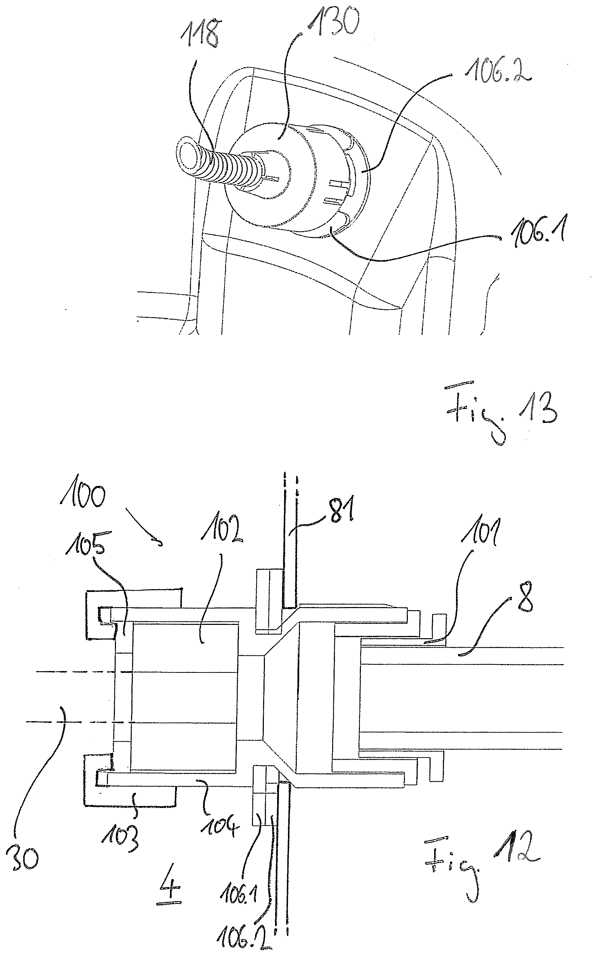

Figur 12 zeigt ein Fitting 100, das in die Seitenwand 81 gesetzt wird, in einem Schnitt und illustriert eine zu dem Adapter alternative Befestigungsmöglichkeit. Der Gehäuseinnenraum 4 ist in der Darstellung auf der linken Seite angeordnet, von rechts wird das erdverlegte Leerrohr 8 eingeschoben. Bei dem Fitting 100 handelt es sich um ein Steckfitting, das Leerrohr 8 ist nach dem vollständigen Einschieben über eine Verkrallung auszugssicher gehalten (das Leerrohr 8 ist nicht im vollständig, sondern teilweise eingeschobenen Zustand gezeigt). Die Verkrallung lässt sich durch Eindrücken eines Demontagerings 101 wieder lösen, solche Fittinge sind im Rohrleitungsbau kommerziell verfügbar (der Demontagering 101 drückt die Verkrallung von dem Leerrohr 8 weg).

Das Fitting 100 ist in die Seitenwand 81 gesetzt und aufgrund einer Konturierung der Öffnung (vergleiche Figur 7) verdrehsicher gehalten. Dies ist speziell mit Blick auf den Montageschritt nach dem Einblasen des Datenkabels 30 von Vorteil, wenn dieses nämlich gegen das Leerrohr 8 gedichtet wird. Dazu weist das Fitting 100 ein Dichtelement 102 auf, das durch Anziehen einer Überwurfmutter 103 axial gestaucht und damit dicht an das Datenkabel 30 angedrückt wird (der Übersichtlichkeit halber nur linkerhand des Fittings 100 strichliert dargestellt). Im Zuge der axialen Kompression legt sich das Dichtelement 102 nicht nur an das Datenkabel 30, sondern auch an eine Innenwandfläche des Gehäuses 104 an, sodass das Leerrohr 8 zum Gehäuseinnenraum 4 hin gedichtet ist. Die Überwurfmutter 103 ist dazu auf einem (nicht dargestellten) Gewinde an der Außenwandfläche des Gehäuses 104 geführt. Sie überträgt die Kraft über einen nach innen eingestellten Kragen auf das Dichtelement 102, wobei dazwischen eine Unterlegscheibe 105 zur Verteilung der Andrückkraft vorgesehen ist. Das in Fig. 8 gezeigte Fitting 100 ist analog aufgebaut, dieselben Bezugszeichen betreffen Teile mit gleicher Funktion.

Des Gehäuse 104 hat, in einem zur Mittenachse des Leerrohres 8 senkrechten Schnitt betrachtet eine Kontur. Diese Kontur ist in Fig. 12 nicht in einem Adapter, sondern direkt in dem konturierten Loch 116 in der Seitenwand 81 verdrehsicher gehalten. Damit dreht das Fitting 100 beim Anziehen der Überwurfmutter 103 nicht mit, was die Montage vereinfacht (ein Monteur muss hierbei von oben in das Anschlussgehäuse 2 hineingreifen). Das Fitting 100 ist in Figur 10 von der rechten Seite in das Loch 70 in der Seitenwand 81 eingesetzt (ohne die Überwurfmutter 103, diese wird dann aufgeschraubt). Als Auszugssicherung sind zwei Sicherungsring 106.1, 106.2 vorgesehen, die jeweils aufgeclipst werden und das Fitting 100 so gegenüber der Seitenwand 81 verspreizen. Die Sicherungsringe 106.1, 106.2 sind jeweils ein Stück weit geöffnet, was aus der Schrägansicht gemäß Figur 13 für den Sicherungsring 106.1 ersichtlich ist.

Wie die Zusammenschau der Figuren 12 und 13 illustriert, ist im vollständig zusammengesetzten Zustand auf die Überwurfmutter 103 ein Adapterteil 130 gesetzt (dieses ist in Figur 10 der Übersichtlichkeit halber nicht dargestellt). Das Adapterteil 130 sitzt formschlüssig auf der jeweiligen Überwurfmutter 103, hat also eine der Überwurfmutter 103 entsprechende Innenkontur. Dadurch kann, nach dem Einblasen des Datenkabels 30, durch Drehen des Adapterteils 130 die Überwurfmutter 103 gedreht und kann das Dichtelement 102 in der vorstehend geschilderten Weise angedrückt werden. In das Adapterteil 130 ist zur gehäuseinnenseitigen Verlängerung ein Leerrohr 118 eingesetzt, vorliegend ein Wellrohr; alternativ zu der Befestigung mittels Adapter könnte das Leerrohr 118 auch direkt in das Fitting 100 eingesetzt sein.

## Patentansprüche

1. Verwendung einer Anschlussgehäusevorrichtung (1) zum Bereitstellen einer Datenkabelanbindung für eine Datennutzer- oder Datenverteilerstelle (16), und zwar einer Anbindung an eine Datenkabel-Verzweigungsstelle (24),
welche Anschlussgehäusevorrichtung (1) ein Anschlussgehäuse (2) und
ein Fitting (100) aufweist,
wobei das Anschlussgehäuse (2) einen Gehäuseinnenraum (4) begrenzt, der über eine Öffnung (5) in dem Anschlussgehäuse (2) zugänglich ist,
und wobei das Fitting (100) an dem Anschlussgehäuse (2) festgelegt ist,
bei welcher Verwendung das Anschlussgehäuse (2) zwischen der Datenkabel-Verzweigungsstelle (24) und der Datennutzer- oder Datenverteilerstelle (16) solchermaßen in einen Boden eingebaut wird, dass der Gehäuseinnenraum (4) von oben über die Öffnung (5) in dem Anschlussgehäuse (2) zugänglich bleibt,
und bei welcher Verwendung ferner ein Leerrohr (8.1) zwischen der Datenkabel-Verzweigungsstelle (24) und dem Anschlussgehäuse (2) in dem Boden verlegt wird,
wobei das Leerrohr (8.1) über das Fitting (100) an das Anschlussgehäuse (2) und damit an den Gehäuseinnenraum (4) angeschlossen wird.

2. Verwendung nach Anspruch 1, bei welcher das Fitting (100) mit dem Anschlussgehäuse (2) zusammengesetzt ist, also an dem Anschlussgehäuse (2) montiert ist.

3. Verwendung nach Anspruch 2, bei welcher das Fitting (100) über einen Adapter (80) an dem Anschlussgehäuse (2) montiert ist, nämlich das Fitting (100) an den Adapter (80) und der Adapter (80) an das Anschlussgehäuse (2) gesetzt ist.

4. Verwendung nach Anspruch 3, bei welcher in einer den Gehäuseinnenraum (4) begrenzenden Wand (81) des Anschlussgehäuses (2) ein Loch (70) vorgesehen ist, in welches der Adapter (80) eingesetzt ist.

5. Verwendung nach Anspruch 4, bei welcher der Adapter (80) in dem Loch (70) verrastet und damit, bezogen auf eine Längsachse (84) des Lochs (70), axial formschlüssig und vorzugsweise auch verdrehsicher in dem Loch (70) gehalten ist.

6. Verwendung nach einem der Ansprüche 3 bis 5, bei welcher das Loch (70) in der Wand (81) des Anschlussgehäuses (2) vor dem Einsetzen des Adapters (80) mit einem Blindverschluss verschlossen ist, der über eine Sollbruchstelle einstückig mit der Wand (81) des Anschlussgehäuses (2) ausgebildet ist und zum Einsetzen des Adapters (80) ausgetrennt wird.

7. Verwendung nach einem der Ansprüche 3 bis 6, bei welcher der Adapter (80) eine Durchgangsöffnung (90) bildet, in welcher das Fitting (100), bezogen auf eine Längsachse (84) der Durchgangsöffnung (90), axial formschlüssig gehalten ist.

8. Verwendung nach Anspruch 7, bei welcher vor dem Anschließen des Leerrohres (8.1) an das Fitting (100) zunächst das Fitting (100) in die Durchgangsöffnung (90) des Adapters (80) eingesetzt wird und dann der Adapter (80) an das Anschlussgehäuse (2) angesetzt wird.

9. Verwendung nach einem der Ansprüche 3 bis 8, bei welcher das Fitting (100) in dem an das Anschlussgehäuse (2) gesetzten Adapter (80) verdrehsicher gehalten ist.

10. Verwendung nach einem der Ansprüche 3 bis 9, bei welcher der Adapter (80) vor dem Ansetzen an das Anschlussgehäuse (2) aus mehreren Adaptern (80) ausgewählt wird, die hinsichtlich ihrer Schnittstelle zu dem Anschlussgehäuse (2) untereinander baugleich sind, sich jedoch dahingehend unterscheiden, dass sie zur Aufnahme unterschiedlicher Fittinge (100) ausgelegt sind.

11. Verwendung nach einem der vorstehenden Ansprüche, bei welcher zwischen dem Anschlussgehäuse (2) und der Datennutzer- oder Datenverteilerstelle (16) ein Anschluss-Leerrohr (8.2) verlegt wird, welches einen anderen Durchmesser als das zwischen der Datenkabel-Verzweigungsstelle (24) und dem Anschlussgehäuse (2) verlegte Leerrohr (8.1) hat.

12. Verwendung nach Anspruch 11, bei welcher das zwischen dem Anschlussgehäuse (2) und der Datennutzer- oder Datenverteilerstelle (16) verlegte Anschluss-Leerrohr (8.2) einen größeren Durchmesser als das zwischen der Datenkabel-Verzweigungsstelle (24) und dem Anschlussgehäuse (2) verlegte Leerrohr (8.1) hat.

13. Verwendung nach einem der vorstehenden Ansprüche, bei welcher an eine dem Leerrohr (8.1) entgegengesetzte Seite des Fittings (100) zur Verlängerung in dem Gehäuseinnenraum (4) ein Leerrohr (118) gesetzt wird, das zumindest abschnittsweise eine gewellte Außenwandfläche und/oder eine Spiralform hat.

14. Verwendung nach einem der vorstehenden Ansprüche, bei welcher in dem Anschlussgehäuse (2) ein Kabelgehäuse (201) und/oder Dichtbehälter (70) angeordnet und über ein zur gehäuseinnenseitigen Verlängerung an das Fitting (100) gesetztes Leerrohr (118) angebunden ist, wobei das zur gehäuseinnenseitigen Verlängerung angesetzte Leerrohr (118) eine Überlänge hat und das Kabelgehäuse (201) und/oder der Dichtbehälter (70) mit daran befestigtem Leerrohr (118) nach oben durch die Öffnung (5) aus dem Anschlussgehäuse herausgenommen wird.

15. Kabelanbindungseinheit, die sich aus einer Verwendung nach einem der vorstehenden Ansprüche ergibt, mit
einer Anschlussgehäusevorrichtung (1)
welche Anschlussgehäusevorrichtung (1) ein Anschlussgehäuse (2) und
ein Fitting (100) aufweist,
wobei das Anschlussgehäuse (2) einen Gehäuseinnenraum (4) begrenzt, der über eine Öffnung (5) in dem Anschlussgehäuse (2) zugänglich ist,
und wobei das Fitting (100) an dem Anschlussgehäuse (2) festgelegt ist,
wobei das Anschlussgehäuse (2) zum Bereitstellen einer Datenkabelanbindung für eine Datennutzer- oder Datenverteilerstelle (16), und zwar einer Anbindung an eine Datenkabel-Verzweigungsstelle (24), zwischen der Datenkabel-Verzweigungsstelle (24) und der Datennutzer- oder Datenverteilerstelle (16) solchermaßen in einen Boden eingebaut ist, dass der Gehäuseinnenraum (4) von oben über die Öffnung (5) in dem Anschlussgehäuse (2) zugänglich ist,
und wobei ferner ein Leerrohr (8.1) zwischen der Datenkabel-Verzweigungsstelle (24) und dem Anschlussgehäuse (2) in dem Boden verlegt und über das Fitting (100) an das Anschlussgehäuse (2) und damit an den Gehäuseinnenraum (4) angeschlossen ist.
